(19) Europäisches Patentamt
European Patent Office
Office européen des brevets

(11) Veröffentlichungsnummer: **0 001 739**
**A1**

(12) # EUROPÄISCHE PATENTANMELDUNG

(21) Anmeldenummer: 78100661.4

(22) Anmeldetag: 14.08.78

(51) Int. Cl.[2]: C 08 G 18/38
C 07 C 27/00, C 07 C 31/18
C 07 C 47/19, C 07 C 49/17
C 08 G 12/02

(30) Priorität: 26.08.77 DE 2738532

(43) Veröffentlichungstag der Anmeldung: 16.05.79 Patentblatt 79/10

(84) Benannte Vertragsstaaten: BE CH DE FR GB LU NL

(71) Anmelder: Bayer Aktiengesellschaft
Zentralbereich Patente,Marken und Lizenzen Bayerwerk
D-5090 Leverkusen 1(DE)

(72) Erfinder: Wagner, Kuno, Dr.
Am Kiesberg 8
D-5090 Leverkusen(DE)

(54) **Gegenüber Isocyanaten reaktive Gemische, Verfahren zu deren Herstellung und deren Verwendung zur Herstellung von Aminoplastkunststoffen oder von Polyurethankunststoffen.**

(57) Gegenüber Isocyanaten reaktive Mischungen aus

a) 10-95 Gew.-% (bezogen auf a + b+ + c) einer Mischung aus mehrwertigen Alkoholen, Hydroxyaldehyden und Hydroxyketonen, welche durch Kondensation von Formaldehydrat erhalten wurde,

b) 5-80 Gew.-% (bezogen auf a+ b + c) an zur Aminoplastbildung befähigten Monomeren bzw. deren N-Methylolierungsprodukten und

c) 0-80 Gew.-% (bezogen auf a + b + c) an Wasser.

Die Mischungen werden durch Kondensation von Formaldehyd in Gegenwart der genannten Monomeren gewonnen und zur Herstellung von Polyurethanen und Aminoplasten verwendet.

EP 0 001 739 A1

BAYER AKTIENGESELLSCHAFT
Zentralbereich
Patente, Marken und Lizenzen

5090 Leverkusen, Bayerwerk
Sft/mo/AB

BEZEICHNUNG GEÄNDERT
siehe Titelseite

Gegenüber Isocyanaten reaktive Gemische

Die vorliegende Erfindung betrifft bei Raumtemperatur flüssige, relativ niedrig viskose Gemische aus Formose, Aminoplast-Monomeren und ggf. Wasser und/oder kristallinen Mono- oder Disacchariden sowie die Verwendung derartiger Gemische zur Herstellung von Polyurethan-Kunststoffen, insbesondere Schaumstoffen.

Unter "Formose" werden erfindungsgemäß die an sich bekannten Gemische von niedermolekularen Polyhydroxyl-Verbindungen (mehrwertigen Alkoholen, Hydroxyaldehyden und Hydroxyketonen) verstanden, welche bei der Kondensation von Formaldehydhydrat entstehen.

Die Herstellung von Gemischen mehrwertiger Alkohole, Hydroxyaldehyde und Hydroxyketone durch Selbstkondensation des Formaldehydhydrats wird in zahlreichen Literaturstellen beschrieben. Beispielsweise seien in diesem Zusammenhang Butlerow und Loew, Annalen 120, 295 (1861), bzw. J.pr.Chem. 33, 321 (1886), Pfeil, chemische Berichte 84, 229 (1951), Pfeil und Schroth, chemische Berichte 85, 303 (1952), R.D. Partridge und A.H. Weiss, Carbohydrate Research 24,

29-44 (1972), die Formosen aus Glycerinaldehyd bzw. Dioxyaceton nach Emil Fischer, die deutschen Patentschriften 822 385, 830 951 und 884 794, die US-Patentschriften 2 224 910, 2 269 935 und 2 272 378 sowie die englische Patentschrift 513 708 genannt. Diese bekannten Verfahren des Standes der Technik sind jedoch mit gewissen Nachteilen behaftet (toxikologisch bedenkliche Katalysatoren, schlechte Raum-Zeit-Ausbeuten, gefärbte Nebenprodukte); in jüngster Zeit wurden von der Anmelderin neue Verfahren entwickelt, nach denen sich in hoher Ausbeute mit gängigen Katalysatoren praktisch farblose und von störenden Nebenprodukten freie Formosen herstellen lassen.

Eines dieser neuen Verfahren besteht darin, daß man die Kondensation des Formaldehydhydrats in Gegenwart von löslichen oder unlöslichen Blei(II)-salzen, bzw. an hochmolekulare Träger gebundenen Blei(II)-Ionen als Katalysator und eines Gemisches aus Hydroxyaldehyden und Hydroxyketonen als Co-Katalysator ablaufen läßt, wie es bei der Kondensation von Formaldehydhydrat entsteht und welches durch folgende Molverhältnisse charakterisiert ist:

Verbindungen mit 3 C-Atomen/Verbindungen mit 4 C-Atomen:
0,5 bis 2,0
Verbindungen mit 4 C-Atomen/Verbindungen mit 5 C-Atomen:
0,2 bis 2,0
Verbindungen mit 5 C-Atomen/Verbindungen mit 6 C-Atomen:
0,5 bis 5,0

wobei der Anteil der Komponenten mit 3 bis 6 C-Atomen mindestens 75 Gew.-%, vorzugsweise mehr als 85 Gew.-%, bezogen auf gesamten Co-Katalysator, beträgt.

Die Reaktionstemperatur liegt dabei im allgemeinen zwischen 70 und 110°C, bevorzugt zwischen 80 und 100°C, und

der pH-Wert der Reaktionslösung wird durch kontrollierte Zugabe einer anorganischen oder organischen Base bis zu einem Umsatz von 10-60 %, vorzugsweise 30-50 %, auf einen Wert von 6,0-8,0, bevorzugt 6,5-7,0, und anschließend auf einen Wert von 4,0-6,0, bevorzugt 5,0-6,0, eingestellt. Überraschenderweise läßt sich die Produktverteilung der entsprechenden Polyol-, Hydroxyaldehyd- und Hydroxyketongemische durch diese spezielle pH-Führung und durch anschließende Kühlung bei verschieden hohen Restformaldehydgehalten (0 bis 10 Gew.-%, vorzugsweise 0,5 bis 6 Gew.-%) in reproduzierbarer Weise variieren.

Nachdem man die Selbstkondensation des Formaldehydhydrats durch Kühlen und/oder durch Desaktivierung des bleihaltigen Katalysators mittels Säuren unterbrochen hat, wird gegebenenfalls der Katalysator in an sich bekannter Weise entfernt und das in den Produkten enthaltene Wasser verdampft. Hinsichtlich näherer Einzelheiten sei auf die deutsche Offenlegungsschrift 2 639 084 verwiesen.

Eine weitere Möglichkeit, in hoher Raum-Zeit-Ausbeute hochkonzentrierte farblose Formosen herzustellen, besteht darin, wäßrige Formalinlösungen und/oder Paraformaldehyd-Dispersionen in Gegenwart eines löslichen oder unlöslichen Metallkatalysators und eines durch teilweise Oxidation eines zwei- oder mehrwertigen, mindestens zwei benachbarte Hydroxylgruppen aufweisenden Alkohols mit einem Molekulargewicht zwischen 62 und 242 bzw. eines Gemisches derartiger Alkohole dargestellten Co-Katalysators zu kondensieren, wobei man den pH-Wert der Reaktionslösung durch gesteuerte Zufuhr einer Base bis zu einem Umsatz von 5 bis 40 % zwischen 6,0 und 9,0 hält und anschließend bis zum Abbruch der Kondensationsreaktion auf 4,5 bis 8,0 einstellt, so daß er nun um 1,0 bis 2,0 Einheiten tiefer liegt als in der ersten Reaktionsphase, dann die Reaktion bei einem Restgehalt von 0-10 Gew.-% Formaldehyd durch Desaktivierung des Katalysators unterbricht und den Katalysator entfernt. Im Detail wird diese Arbeitsweise in der DOS 2 714 084 beschrieben.

Qualitativ hochwertige Formosen können auch durch Kondensation von Formaldehyd in Gegenwart eines Metallkatalysators und mehr als 10 Gew.-%, bezogen auf Formaldehyd, eines oder mehrerer zwei- oder mehrwertiger niedermolekularer Alkohole und/oder höhermolekularer Polyhydroxylverbindungen hergestellt werden. Derartige Formose-Polyolgemische sind Gegenstand von DOS 2 714 104.

Besonders wirtschaftlich ist es, Formose direkt, d.h. ohne den Umweg über wäßrige Formalinlösungen oder Paraformaldehyd, aus Formaldehyd enthaltenden Synthesegasen herzustellen. Man leitet zu diesem Zweck die Synthesegase, wie sie bei der großtechnischen Herstellung von Formaldehyd anfallen, bei Temperaturen zwischen 10 und 150°C kontinuierlich oder diskontinuierlich in eine Absorptionsflüssigkeit, welche aus Wasser, ein- oder mehrwertigen niedermolekularen Alkoholen und/oder höhermolekularen Polyhydroxylverbindungen und/oder zur Endiolbildung befähigten Verbindungen als Co-Katalysator besteht und gegebenenfalls lösliche oder unlösliche Metallverbindungen, welche gegebenenfalls an hochmolekulare Träger gebunden sind, als Katalysator enthält und die einen pH-Wert von 3 bis 10 aufweist, kondensiert den Formaldehyd direkt in situ in der Absorptionsflüssigkeit (gegebenenfalls auch in einem

nachgeschalteten Reaktionsrohr bzw. einer nachgeschalteten Rührkesselkaskade), bricht die Selbstkondensation des Formaldehyds bei einem Restformaldehydgehalt im Reaktionsgemisch von 0 bis 10 Gew.-% durch Kühlen und/oder durch Desaktivierung des Katalysators mittels Säuren ab und entfernt schließlich den Katalysator. Bezüglich näherer Einzelheiten dieses Verfahrens sei auf die deutschen Offenlegungsschriften 2 721 093 und 2 721 186 verwiesen.

Die so hergestellten Formosen können nachträglich auch durch überschüssigen Formaldehyd in ihre Halbacetale übergeführt oder durch Reaktion mit Formaldehyd in Gegenwart von Basen α-methyloliert wurden. Modifizierte Formosen dieser Art werden ebenfalls in der DOS 2 721 186 näher beschrieben und sollen auch unter den Begriff "Formose" im Sinne der vorliegenden Erfindung fallen.

Je nach der Reaktionsführung bei der Formaldehydkondensation lassen sich die Eigenschaften der Formose (mittlere Hydroxylfunktionalität; Verzweigungsgrad; Gehalt an reduzierenden Gruppen) in weiten Grenzen variieren. Im allgemeinen ist das mittlere Molekulargewicht und damit die Hydroxylfunktionalität der Formosen um so höher, je weiter die Kondensationsreaktion geführt wird, d.h. je weniger Restformaldehyd beim Abbruch der Kondensationsreaktion vorhanden ist. So wird etwa, wenn die Kondensationsreaktion bis zu einem Restformaldehydgehalt von 0 bis 1,5 Gew.-% geführt wird, eine Formose erhalten, welche ca. 25 Gew.-% an Anteilen mit 5 C-Atomen, 45 Gew.-% an Verbindungen mit 6 C-Atomen und ca. 20 Gew.-% an Verbindungen mit 7 und mehr C-Atomen enthält. Dagegen werden zusammen nur ca. 10 % an Polyolen, Hydroxyketonen und Hydroxyaldehyden mit 2,3 und 4 C-Atomen erhalten. Dies entspricht einer mittleren Hydroxylfunktionalität von ca. 5.

Durch Abbruch der Formaldehydselbstkondensation bei etwas höheren Restformaldehydgehalten werden, wie oben erläutert, andere Komponentenverteilungen der Startergemische erhalten. So ergibt sich bei einem Abbruch der Kondensationsreaktion bei 2 bis 2,5 % Formaldehydgehalt ein Gemisch mehrwertiger Alkohole, Hydroxyaldehyde und Hydroxyketone mit einer mittleren Hydroxylfunktionalität von ca. 4. Noch andere Komponentenverteilungen mit weiter erniedrigter durchschnittlicher Hydroxylfunktionalität werden erhalten, wenn man die Kondensationsreaktion bei Restformaldehydgehalten abbricht, die noch höher liegen als 2,5.

Durch Abmischen der Formose mit di- oder höherfunktionellen niedermolekularen Alkoholen läßt sich gegebenenfalls die Funktionalität der Produkte in gewünschter Weise weiter variieren, wenn bestimmte anwendungstechnische Effekte erreicht werden sollen. Als derartige niedermolekulare mehrwertige Alkohole (Molekulargewichte bis ca. 300) kommen beispielsweise Äthylenglykol, Propandiol-1,2, Propandiol-1,3, Butandiol-1,4, Diäthylenglykol, Dipropylenglykol, Triäthylenglykol, Tetraäthylenglykol, Dibutylenglykol, Glycerin, Trimethylolpropan, Pentaerythrit, Sorbit, Butantriole und Hexantriole sowie Oxäthylierungsprodukte dieser Alkohole bzw. auch hydrierte Formose (Formit) in Frage. Auch die Verwendung von Aminen und/oder Äthanolaminen als Abmischkomponente ist möglich.

Beispiele hierfür sind Mono-, Di- und Triäthanolamin, Mono-, Di- und Triisopropanolamin, N-Alkanolamine, wie N-Methyldiäthanolamin und N-Äthyldiäthanolamin sowie niedere aliphatische Mono- und Polyamine, wie Äthylamin, Äthylendiamin, Diäthylentriamin und Triäthylentetramin.

Gemäß eigenen älteren Vorschlägen (siehe insbesondere die bereits oben erwähnten deutschen Offenlegungsschriften 26 39 084, 27 14 084 und 27 14 104) können Formosen als Polyol-Komponente im Polyisocyanat-Polyadditionsverfahren zur Herstellung von Polyurethan-Kunststoffen verwendet werden. Es wurde nun gefunden, daß sich auf diese Weise Polyurethan-Kunststoffe, insbesondere Schaumstoffe, mit außerordentlich hoher Flammwidrigkeit herstellen lassen, wenn als Ausgangskomponente anstelle der reinen Formose ein Gemisch aus Formose und Aminoplast-Monomeren eingesetzt wird. Derartige Gemische besitzen im Vergleich zu reiner Formose eine überraschend niedrige Viskosität, was anwendungstechnisch von großem Vorteil ist, weil sich die Gemische leicht dosieren lassen. Die Mischungen aus Formose und zur Aminoplastbildung befähigten Monomeren haben darüber hinaus überraschenderweise die Fähigkeit, große Mengen an kristallisierten Zuckern (Mono- und/oder Disacchariden) zu lösen; sie sind auch in weiten Grenzen mit Wasserglas mischbar.

Gegenstand der Erfindung sind somit gegenüber Isocyanaten reaktive Mischungen aus

a) 10-95 Gew.-%, bevorzugt 20-80 Gew.-%, (bezogen auf a) + b) + c) ) einer Mischung aus mehrwertigen Alkoholen, Hydroxyaldehyden und Hydroxyketonen, welche durch Kondensation von Formaldehydhydrat erhalten wurde,

b) 5-80 Gew.-%, bevorzugt 20-70 Gew.-%, (bezogen auf a) + b) + c) ) an zur Aminoplastbildung befähigten Monomeren bzw. deren N-Methylolierungsprodukten,

c) 0-80 Gew.-%, vorzugsweise 0,3-50 Gew.-%, besonders bevorzugt 0,8-35 Gew.-% (bezogen auf a) + b) + c)), an Wasser und

d) 0-100 Gew.-%, bevorzugt 10-50 Gew.-% (bezogen auf a) + b) + c) ), an Mono- und/oder Disacchariden, wobei das Gewichtsverhältnis der Komponenten a) und b) vorzugsweise zwischen 20:1 und 1:2, besonders bevorzugt zwischen 10:1 und 1:1, liegt.

Vorzugsweise liegen in den erfindungsgemäßen Mischungen pro Mol Formose 0,3-10 Mol, besonders bevorzugt 1-5 Mol, Wasser und 0,5-6 Mol, besonders bevorzugt 1-3 Mol, des Aminoplastmonomeren vor.
Für die erfindungsgemäßen Mischungen kommen im Prinzip beliebige Formosen in Frage; für den erfindungsgemäß bevorzugten Anwendungszweck (Herstellung von Polyurethan-Kunststoffen) setzt man jedoch vorteilhafterweise die nach den oben beschriebenen neueren Verfahren der Anmelderin hergestellten Formosen ein, da diese im allgemeinen farblos und frei von störenden Nebenprodukten sind. Bevorzugt werden solche Formosen verwendet, welche ein mittleres Molekulargewicht zwischen 92 und 360, besonders bevorzugt zwischen 100 und 240, und einen Zuckergehalt (berechnet als Glukose vom Molekulargewicht 180) von 4 bis 85 Gew.-%, besonders bevorzugt 6-78 Gew.-%, aufweisen. Wegen ihres höheren Gehalts an primären Hydroxylgruppen sind darüber hinaus für manche Anwendungszwecke solche Formosen bevorzugt, welche, wie oben beschrieben, durch nachträgliche Behandlung mit Formaldehyd in basischen pH-Bereichen $\alpha$-aldolisiert wurden. Selbstverständlich können erfindungsgemäß auch Formosen eingesetzt werden,

welche nach ihrer Herstellung durch Reaktion mit Formaldehyd in Halbacetale übergeführt wurden, oder durch nachträgliche Behandlung mit Säuren inter- bzw. intramolekular acetalisierte oder ketalisierte Formosen oder auch durch Zusatz von Carbonyl-Verbindungen, welche keine Hydroxylgruppe am $\alpha$-ständigen Kohlenstoffatom aufweisen, oder durch Maillard-Reaktion, durch Acyloinkondensation in Gegenwart von Cyaniden oder durch Phenoplastbildner modifizierte Formosen eingesetzt werden. Alle diese modifizierten Formosen werden beispielsweise in der schon oben erwähnten deutschen Offenlegungsschrift 27 21 186 im Detail beschrieben.

Als Komponente b) in den erfindungsgemäßen Gemischen kommen alle an sich bekannten, zur Aminoplastbildung befähigten Stoffe in Frage, wie sie beispielsweise in den deutschen Offenlegungsschriften 23 24 134 und 27 13 198 beschrieben werden. Im allgemeinen ist es bevorzugt, die N-Methylolierungsprodukte dieser Verbindungen einzusetzen, da diese bei der Reaktion mit Polyisocyanaten leichter in die Polyurethan-Kunststoffe eingebaut werden können.

Erfindungsgemäß bevorzugte Aminoplast-Monomere sind Harnstoff symmetrisch oder asymmetrisch substituierte Harnstoffe wie N, N-Dimethyl (bzw. -diäthyl oder -dibutyl)-Harnstoff, Thioharnstoff, Guanidin, Dicyandiamid, Melamin, Oxamid, Äthylenharnstoff, $\varepsilon$-Caprolactam, Pyrrolidon-(2), Anilin, Acetylen-Diurein und die N-Methylolverbindungen all dieser Monomeren. Besonders bevorzugt sind erfindungsgemäß Harnstoff, N-Monomethylolharnstoff, N, N'-Dimethylolharnstoff, Thioharnstoff, N-Monomethylolthioharnstoff, N, N'-Dimethylolthioharnstoff, $\varepsilon$-Caprolactam und N-Methylol-$\varepsilon$-Caprolactam.

Wie schon erwähnt, sind überraschenderweise in den erfindungsgemäßen Gemischen relativ hohe Mengen an kristallisierten Mono- und Disacchariden wie beispielsweise Glukose, Maltose oder Rohrzucker löslich, ebenso natürliche Invertzucker (beispielsweise Bienenhonig) oder künstliche Invertzucker, z.B. Hydrolysate von Rohrzucker, ferner durch Hydrolyse oder enzymatisch abgebaute Mais- und Kartoffelstärke, Hydrolysate von Pektinstoffen (Amylose und Amylopektine) oder Hydrolysate von beliebigen anderen Di- und/oder Polysacchariden, z.B. von Trehalose, Galactose, Raffinose, Cellulose und Dextrinen. Dies ist technisch von besonderem Interesse, weil derartige kristallisierte Mono- bzw. Disaccharide sich in reiner Form nur schwer mit Polyisocyanaten umsetzen lassen. Die erfindungsgemäßen Gemische werden beispielsweise erhalten, wenn man die Formaldehyd-Kondensation gemäß den oben beschriebenen Verfahren in Gegenwart der Aminoplast-Monomeren ausführt. Es ist als äußerst überraschend anzusehen, daß die erfindungsgemäßen Mischungen auf diesem Wege zugänglich sind: Bekanntlich stehen Aminoplastbildner in Gegenwart von Wasser und Formaldehyd im Gleichgewicht mit den entsprechenden N-Methylolverbindungen. Diese Methylolierungsprodukte sind sehr reaktionsfähige Verbindungen und geben schon bei Raumtemperatur sowohl im neutralen als auch im sauren oder basischen Bereich Anlaß zu den verschiedenartigsten Kondensationsreaktionen unter Ausbildung in Wasser völlig unlöslicher, vernetzter oder linearer Polykondensate (Polymethylenharnstoffe). Die zahlreichen möglichen Kondensationsreaktionen von methylolierten Aminoplastbildnern werden beispielsweise von H. Staudinger und K. Wagner in "Die Makromolekulare Chemie;, Heft 3 (Band XII), Seite 168-235, beschrieben. Es war daher nicht zu erwarten, daß die

Formosebildung auch in Gegenwart derartiger N-methylolierter Aminoplast-Monomeren ungestört abläuft und Gemische erhalten werden, welche aus Formose und im wesentlichen unverändertem Aminoplastbildner bestehen. Je nachdem, bis zu welchem Umsetzungsgrad die Formaldehyd-Selbstkondensation geführt wird, liegen am Ende der Reaktion dabei die Aminoplastbildner entweder als solche oder noch in Form ihrer N-Methylolderivate vor. Selbstverständlich ist es auch möglich, die Formaldehyd-Kondensation bis zu einem Umsatz von 100 % zu führen und die im Reaktionsprodukt vorhandenen Aminoplast-Monomeren nachträglich durch Zusatz von Formaldehyd wieder in die N-Methylolierungsprodukte überzuführen.

Gegenstand der vorliegenden Erfindung ist somit auch ein Verfahren zur Umwandlung von Formaldehyd in ein Gemisch aus niedermolekularen, mehrwertigen Alkoholen, Hydroxyaldehyden und Hydroxyketonen, indem man 20-65 Gew.-% Formaldehyd enthaltende wäßrige Formalin-Lösungen und/oder Paraformaldehyd-Dispersionen bei pH-Werten zwischen 4 und 9, vorzugsweise zwischen 5 und 8, und bei einer Reaktionstemperatur von 70-110$^{o}$C in Gegenwart von löslichen oder unlöslichen Salzen von Metallen der 2. bis 4. Hauptgruppe oder der 1. bis 8. Nebengruppe des periodischen Systems der Elemente bzw. an einen hochmolekularen Träger gebundenen Metallionen und eines Co-Katalysators auf Basis von zur Endiolbildung befähigten Verbindungen kondensiert, welches dadurch gekennzeichnet ist, daß man die Kondensationsreaktion in Gegenwart von vorzugsweise 0,1-3 Mol, bezogen auf 1 Mol Formaldehyd, an zur Aminoplastbildung befähigten Verbindungen ausführt und gegebenenfalls anschließend überschüssiges Wasser in an sich bekannter Weise entfernt.

Die erfindungsgemäßen Mischungen aus Formose und Aminoplastbildnern können aber auch hergestellt werden, indem man bei der Kondensation von Formaldehyd zu Formose die Reaktion nur bis zu einem Umsatz von 40-95 %, vorzugsweise 70-90 %, bezogen auf eingesetzten Formaldehyd, ablaufen läßt und - vorzugsweise nach Desaktivierung des Formose-Katalysators - den restlichen Formaldehyd durch Zusatz von zur Aminoplastbildung befähigten Stoffen durch N-Methylolierung, vorzugsweise bei pH-Werten zwischen 7 und 9, abfängt.

Gegenstand der Erfindung ist somit auch ein Verfahren zur Herstellung der erfindungsgemäßen Gemische aus Formose und Aminoplastmonomeren, welches dadurch gekennzeichnet ist, daß man 20-65 Gew.-% Formaldehyd enthaltende wäßrige Formalin-Lösungen und/oder Paraformaldehyd-Dispersionen bei pH-Werten zwischen 4 und 9, vorzugsweise zwischen 5 und 8, bei einer Reaktionstemperatur von 70- 110°C in Gegenwart von löslichen oder unlöslichen Salzen von Metallen der 2. bis 4. Hauptgruppe oder der 1. bis 8. Nebengruppe des periodischen Systems der Elemente bzw. an einen hochmolekularen Träger gebundenen Metallionen sowie eines Co-Katalysators auf Basis von zur Endiolbildung befähigten Verbindungen bis zu einem Umsatz von 40-95 %, vorzugsweise 70-90 %, bezogen auf eingesetzten Formaldehyd, zu Gemischen von niedermolekularen mehrwertigen Alkoholen, Hydroxyaldehyden und Hydroxyketonen kondensiert, den Restformaldehyd durch Zusatz von zur Aminoplastbildung befähigten Verbindungen unter N-Methylolierung bindet und gegebenenfalls anschließend überschüssiges Wasser in an sich bekannter Weise entfernt.

Selbstverständlich ist es jedoch auch möglich, die erfindungsgemäßen Gemische dadurch herzustellen, daß man in eine

nach beliebigen Verfahren hergestellte formaldehydfreie wäßrige Formose-Lösung die zur Aminoplastbildung befähigten Verbindungen bzw. deren N-Methylol-Derivate einbringt, anschließend gegebenenfalls noch wäßrigen Formaldehyd zwecks N-Methylolierung der Aminoplastmonomeren zusetzt und dann das überschüssige Wasser, beispielsweise in einem Dünnschichtverdampfer bei einem Vakuum von 1-18 Torr und einer Temperatur zwischen 35 und 60°C, entfernt.

Gegenstand der Erfindung ist daher auch ein Verfahren zur Herstellung der erfindungsgemäßen Gemische aus Formose und Aminoplastbildnern, welches dadurch gekennzeichnet ist, daß man in einer wäßrigen Lösung eines Gemisches niedermolekularer mehrwertiger Alkohole, Hydroxyaldehyde und Hydroxyketone, welches durch Selbstkondensation von Formaldehyd-Hydrat erhalten wurde, die zur Aminoplastbildung befähigten Verbindungen bzw. deren N-Methylolverbindungen löst, oder umgekehrt, gegebenenfalls Formaldehyd zusetzt, um die zur Aminoplastbildung befähigten Verbindungen in ihre N-Methylol-Derivate überzuführen, und gegebenenfalls anschließend die überschüssige Menge Wasser in an sich bekannter Weise entfernt.

Vorzugsweise arbeitet man bei der nachträglichen N-Methylolierung der Aminoplastmonomeren in einem pH-Bereich zwischen 7 und 9, besonders bevorzugt zwischen 7,5 und 8, und bei Temperaturen zwischen 10 und 65°C, besonders bevorzugt 20-50°C.

In analoger Weise kann man auch die oben näher beschriebenen kristallinen Zucker in die erfindungsgemäßen Mischungen einbringen, indem man die Zucker vor oder nach dem Zusatz des Aminoplastmonomeren in der wäßrigen Formose-Lösung auflöst.

Es wurde gefunden, daß je nach den bei der Aufarbeitung (insbesondere bei der Entwässerung) der Formose/Aminoplastmonomer-Gemische Produkte mit unterschiedlichen Viskositäten erhalten werden. Bei der schonenden Entwässerung (z.B. mittels eines Dünnschichtverdampfers) von Gemischen, welche vorzugsweise von den Metallionen befreit wurden, welche aus dem Katalysator für die Formaldehyd-Kondensation stammen, bilden sich erfindungsgemäße Gemische von im allgemeinen extrem niedriger Viskosität, in welchen praktisch keinerlei chemische Reaktion zwischen dem Aminoplastbilder und den Hydroxyl- oder Carbonylgruppen der Formose stattgefunden hat.

Beim Einengen der erfindungsgemäßen Gemische in Gegenwart von Formose-Metallkatalysatoren im basischen Bereich (pH = 7,5-9) bei Temperaturen von 50-60°C verändern sich N-methylolgruppenfreie Formose-Aminoplastmonomer-Mischungen nicht nennenswert, jedoch laufen in der Endphase mit abnehmendem Wassergehalt der Lösung Dehydratisierungsreaktionen der Formosen und Kondensationen der Carbonylgruppen der Formosen mit den Aminoplastmonomeren als Nebenreaktionen unter Dunkelfärbung der Mischungen ab (Maillard-Reaktionen und weitgehend unbekannte Kondensations- und Umlagerungsreaktionen).

Enthalten die erfindungsgemäßen Mischungen im pH-Bereich von 7,5 - 9 N-methylolgruppenhaltige Aminoplastmonomere und Formose-Metallkatalysatoren, so findet bei längeren Entwässerungszeiten erneut eine Formose-Bildung aus dem abgespaltenen Formaldehyd der N-Methylolgruppen statt und daneben bilden sich N-Methylenäthergruppen enthaltende, lösliche Aminoplastmonomere, z.B. mit Struktureinheiten

$$\left(-\underset{\substack{\|\\ O}}{C}-NH-CH_2-O-CH_2-NH-\underset{\substack{\|\\ O}}{C}-\right)$$

wiederum begleitet von Nebenreaktionen wie der Dehydratisierung der Formosen, Kondensationen ihrer Carbonylgruppen mit den Aminoplastmonomeren und unbekannten Spaltreaktionen der Formosen unter Dunkelfärbung.

Die Entwässerung der erfindungsgemäßen Gemische im stark sauren Bereich von pH 1 - 2 führt im Falle von Mischungen, die z.B. Methylolverbindungen des Harnstoffs, Thioharnstoffs, Dicyandiamids oder Melamins enthalten, zu unlöslichen, vernetzten Aminoplast-Kondensaten.

Aus den vorgenannten Gründen ist es bevorzugt, die erfindungsgemäßen Mischungen im Neutral- bis schwach sauren Bereich (pH 7 - 4,9) erst nach Entfernung der Metallkatalysatoren zu entwässern.

Andererseits kann man auch gezielt die N-Methylolgruppen des Aminoplastbildners durch saure Katalyse mit den Hydroxylgruppen der Formose unter Ausbildung von Methylenäther-Gruppen verknüpfen.

So kann man z.B. bei ausreichendem Überschuß an Formosen und gegebenenfalls anderen Mono- und Polyalkoholen bevorzugt bei pH = 2 - 5,5 mit anorg. oder org. Säuren als Katalysatoren und bei Temperaturen von 30 - 100°C, gegebenenfalls unter Entwässerung im Vakuum, methylolgruppenhaltige Aminoplastmonomere und sich bei der Entwässerung unter Wasserabspaltung bildende methylolgruppenhaltige Oligomere der Aminoplaste mit den OH-Gruppen der Formosen oder ihrer alkoholischen Mischungen veräthern (vgl. Beispiel 10).

Die so erhaltenen O- N-Aminale eignen sich insbesondere als Zusatzmittel für höher molekulare Polyhydroxylverbindungen, um deren Verträglichkeit untereinander bzw. mit den anderen Komponenten einer Polyurethan-Rezeptur zu verbessern.

Auch die eben beschriebenen, durch teilweise Kondensation zwischen den Carbonyl- bzw. Hydroxylgruppen der Formose und dem Aminoplastbildner modifizierten erfindungsgemäßen Gemische und deren Verwendung als Ausgangskomponente für die Herstellung von Polyurethan-Kunststoffen fallen in den Bereich der vorliegenden Erfindung.

Überraschenderweise wurde gefunden, daß die erfindungsgemäßen Gemische auch relativ große Mengen (bis zu 20 Gew.-%, vorzugsweise 5 bis 15 Gew.-%) des in Wasser schwer löslichen Calciumformiats in Lösung halten können. Es ist also nicht erforderlich, aus mit Hilfe von Calciumhydroxyd als Katalysator hergestellten Formosen die Calciumionen zu entfernen, was aus wirtschaftlichen Gründen interessant ist. Darüber hinaus besitzen derartige, Calciumformiat enthaltende Formosegemische eine erhöhte Reaktivität gegenüber Polyisocyanaten.

Wie schon oben erwähnt, können in die erfindungsgemäßen Gemische bis zu 150 Gew.-%, vorzugsweise 10-100 Gew.-%, bezogen auf das Gemisch von Formose, Aminoplastmonomeren und Wasser, an Aluminium-Oxydhydrat eingerührt werden, wobei stabile, nicht sedimentierende, pastenartige Dispersionen entstehen. Diese Dispersionen eignen sich hervorragend für die Herstellung von füllstoffhaltigen Polyurethan-Schaumstoffen.

Wie schon mehrfach erwähnt, liegt der Hauptverwendungszweck der erfindungsgemäßen Gemische in der Herstellung von besonders flammfesten Polyurethan-Kunststoffen, insbesondere Polyurethan-Schaumstoffen.

Gegenstand der vorliegenden Erfindung ist somit auch ein Verfahren zur Herstellung von ggf. zellförmigen Polyurethan-Kunststoffen durch Umsetzung von

A) Polyisocyanaten mit

B) Polyhydroxylverbindungen mit einem Molekulargewicht unter 400, ggf.

C) Polyhydroxylverbindungen mit einem Molekulargewicht zwischen 400 und 10.000 sowie ggf. weiteren gegenüber Isocyanaten reaktiven Verbindungen, ggf. in Gegenwart von

D) Treibmitteln, Katalysatoren, Füllstoffen und weiteren an sich bekannten Zusatzstoffen,

welches dadurch gekennzeichnet ist, daß als Komponente B) die erfindungsgemäßen Gemische eingesetzt werden.

Da in den erfindungsgemäßen Gemischen im allgemeinen mehr oder weniger große Mengen an Wasser enthalten sind (das Wasser läßt sich aus Formosegemischen nur unter größerem technischen Aufwand vollständig entfernen), eignen sich die erfindungsgemäßen Gemische insbesondere zur Herstellung von Polyurethan-Schaumstoffen. Je nach der verwendeten Rezeptur können dabei erfindungsgemäß sowohl offenzellige als auch geschlossenzellige Polyurethan-Hartschaumstoffe als auch offenzellige Weichschaumstoffe hergestellt werden.

Für die Herstellung von offenzelligen Hartschaumstoffen wählt man zweckmäßigerweise solche erfindungsgemäßen Formose / Aminoplastmonomer-Gemische aus, welche zwischen 4 und 25 Gewichtsprozent, besonders bevorzugt zwischen 8 und 20 % Wasser enthalten. Gegebenenfalls können auch die oben beschriebenen Suspensionen von Aluminiumoxydhydrat bzw.

anderen mineralischen Füllstoffen in den erfindungsgemäßen Gemischen eingesetzt werden. Gegebenenfalls kann man auch bis zu 100 Gew.-%, vorzugsweise 10 bis 50 Gew.-%, bezogen auf gesamte Polyolkomponente, einer höhermolekularen Polyhydroxylverbindung (Molekulargewicht ca. 400-10.000) als elastifizierende Komponente mitverwenden. Die Menge des Polyisocyanates in der Rezeptur kann in weiten Grenzen schwanken; es ist möglich, sowohl einen Überschuß an Polyisocyanat (bis zu 120 % der berechneten äquivalenten Menge) als auch eine weniger als äquivalente Menge an Polyisocyanat, berechnet auf die Summe der vorhandenen, gegenüber Isocyanaten reaktiven Komponenten, einsetzen. Es wurde jedoch gefunden, daß die Flammwidrigkeit der so erhaltenen Schaumstoffe umso höher liegt, je kleiner die Kennzahl der Rezeptur (Äquivalentverhältnis von Polyisocyanaten und gegenüber Isocyanaten reaktiven Verbindungen) ist. Vorzugsweise arbeitet man daher im Kennzahlbereich zwischen 20 und 70, besonders bevorzugt zwischen 30 und 60, insbesondere zwischen 35 und 55.

Für die Herstellung von geschlossenzelligen Hartschaumstoffen wählt man vorzugsweise solche erfindungsgemäßen Gemische aus, welche 0 bis 4 %, besonders bevorzugt 0,7 bis 3 Gew.-%, an Wasser enthalten. Die Verschäumung wird in diesem Falle durch den Zusatz von niedrig siedenden Flüssigkeiten, wie z.B. Fluortrichlormethan, bewirkt. Bezüglich der Kennzahl der Rezepturen gilt dasselbe, was bereits bei den offenzelligen Hartschaumstoffen ausgeführt wurde.

Die erfindungsgemäßen Mischungen können jedoch auch in Anteilen von 5 bis 30 Gew.-%, bevorzugt 5 bis 20 Gew.-%, bezogen auf gesamte Polyolkomponente, als Vernetzer bei der Herstellung von offenzelligen Weichschaumstoffen mitverwendet werden. Der Rest der Polyol-Komponente besteht in diesem Fall aus Polyhydroxylverbindungen mit einem Molekulargewicht von 400 bis 10.000, vorzugsweise aus Polyäther-Polyolen mit einem Molekulargewicht von 1000 bis 6000. Die Rezepturen enthalten insgesamt vorzugsweise 2,5 bis 6 Gew.-%, besonders bevorzugt 3 bis 5 Gew.-% (bezogen auf Polyolkomponente) Wasser und soviel Isocyanat, wie einer Kennzahl von 70 bis 130, besonders bevorzugt 90 bis 120, entspricht.

Für die Herstellung der ggf. zellförmigen Polyurethankunststoffe kommen als Isocyanat-Komponente aliphatische, cycloaliphatische, araliphatische, aromatische und heterocyclische Polyisocyanate in Betracht, wie sie z.B. von W. Siefken in Justus Liebigs Annalen der Chemie, 562, Seiten 75 bis 136, beschrieben werden, beispielsweise Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DAS 1 202 785, amerikanische Patentschrift 3 401 190), 2,4- und 2,6-Hexahydrotoluylendiisocyanat sowie beliebige Gemische dieser Isomeren, Hexahydro-1,3- und/oder 1,4-phenylen-diisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Triphenylmethan-4,4', 4"-triisocyanat, Polyphenyl-polymethylen-polyisocyanate, wie sie durch Anilin-Formaldehyd-Kondensation und anschließende Phosgenierung erhalten und z.B. in den britischen Patentschriften 874 430 und 848 671 beschrieben werden, m- und p-Isocyanatophenyl-sulfonyl-isocyanate gemäß der amerikanischen Patentschrift 3 454 606, perchlorierte Arylpolyisocyanate, wie sie z.B. in der deutschen Auslegeschrift 1 157 601 (amerikanische Patentschrift 3 277 138) beschrieben werden, Carbodiimidgruppen aufweisende Polyisocyanate, wie sie in der deutschen Patentschrift 1 092 007 (amerikanische Patentschrift 3 152 162) beschrieben werden, Diisocyanate,

wie sie in der amerikanischen Patentschrift 3 492 330 beschrieben werden, Allophanatgruppen aufweisende Polyisocyanate, wie sie z.B. in der britischen Patentschrift 994 890, der belgischen Patentschrift 761 626 und der veröffentlichten holländischen Patentanmeldung 7 102 524 beschrieben werden, Isocyanuratgruppen aufweisende Polyisocyanate, wie sie z.B. in der amerikanischen Patentschrift 3 001 973, in den deutschen Patentschriften 1 022 789, 1 222 067 und 1 027 394 sowie in den deutschen Offenlegungsschriften 1 929 034 und 2 004 048 beschrieben werden, Urethangruppen aufweisende Polyisocyanate, wie sie z.B. in der belgischen Patentschrift 752 261 oder in der amerikanischen Patentschrift 3 394 164 beschrieben werden, acylierte Harnstoffgruppen aufweisende Polyisocyanate gemäß der deutschen Patentschrift 1 230 778, Biuretgruppen aufweisende Polyisocyanate, wie sie z.B. in der deutschen Patentschrift 1 101 394 (amerikanische Patentschriften 3 124 605 und 3 201 372) sowie in der britischen Patentschrift 889 050 beschrieben werden, durch Telomerisationsreaktionen hergestellte Polyisocyanate, wie sie z.B. in der amerikanischen Patentschrift 3 654 106 beschrieben werden, Estergruppen aufweisende Polyisocyanate, wie sie zum Beispiel in den britischen Patentschriften 965 474 und 1 072 956, in der amerikanischen Patentschrift 3 567 763 und in der deutschen Patentschrift 1 231 688 genannt werden, Umsetzungsprodukte der obengenannten Isocyanate mit Acetalen gemäß der deutschen Patentschrift 1 072 385 und polymere Fettsäurereste enthaltende Polyisocyanate gemäß der amerikanischen Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate").

Unter den erfindungsgemäß bei der Herstellung von Polyurethankunststoffen ggf. mitzuverwendenden Verbindungen mit mindestens 2 gegenüber Isocyanaten reaktionsfähigen Wasserstoffatomen und einem Molekulargewicht von 400-10.000 versteht man neben Aminogruppen, Thiolgruppen oder Carboxylgruppen aufweisenden Verbindungen vorzugsweise Polyhydroxylverbindungen, insbesondere zwei bis acht Hydroxylgruppen aufweisende Verbindungen, speziell solche vom Molekulargewicht 800 bis 10.000, vorzugsweise 1.000 bis 6.000, z.B. mindestens zwei, in der Regel 2 bis 8, vorzugsweise aber 2 bis 4, Hydroxylgruppen aufweisende Polyester, Polyäther, Polythioäther, Polyacetale, Polycarbonate und Polyesteramide, wie sie für die Herstellung von homogenen und von zellförmigen Polyurethanen an sich bekannt sind.

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls z.B. durch Halogenatomen, substituiert und/oder ungesättigt sein.

Als Beispiele hierfür seien genannt: Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terephthalsäuredimethylester und Terephthalsäure-bis-glykolester. Als mehrwertige Alkohole kommen z.B. Äthylenglykol, Propylenglykol-(1,2) und -(1,3), Butylenglykol-(1,4) und -(2,3), Hexandiol-(1,6), Octandiol-(1,8), Neopentylglykol, Cyclohexandimethanol(1,4-Bis-hydroxymethylcyclohexan), 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Methylglykosid, ferner Diäthylenglykol, Triäthylenglykol, Tetraäthylenglykol, Polyäthylenglykole, Dipropylenglykol, Polypropylenglykole, Dibutylenglykol und Polybutylenglykole in Frage. Die Polyester können anteilig endständige Carboxylgruppen aufweisen. Auch Polyester aus Lactonen, z.B. ε-Caprolacton oder Hydroxycarbonsäuren, z.B. ω-Hydroxycapronsäure, sind einsetzbar.

Auch die erfindungsgemäß in Frage kommenden, mindestens zwei, in der Regel zwei bis acht, vorzugsweise zwei bis drei, Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Gegenwart von $BF_3$, oder durch Anlagerung dieser Epoxide, gegebenenfalls im Gemisch oder nacheinander, an Startkomponenten mit reaktionsfähigen Wasserstoffatomen wie Wasser, Alkohole, Ammoniak oder Amine, z.B. Äthylenglykol, Propylenglykol-(1,3) oder -(1,2), Trimethylolpropan, 4,4'-Dihydroxy-diphenylpropan, Anilin, Äthanolamin oder Äthylendiamin hergestellt. Auch Sucrosepolyäther, wie sie z.B. in den deutschen Auslegeschriften 1 176 358 und 1 064 938 beschrieben werden, kommen erfindungsgemäß in Frage. Vielfach sind solche Polyäther bevorzugt, die überwiegend (bis zu 90 Gew.-%, bezogen auf alle vorhandenen OH-Gruppen im Polyäther) primäre OH-Gruppen aufweisen. Auch durch Vinylpolymerisate modifizierte Polyäther, wie sie z.B. durch Polymerisation von Styrol und Acrylnitril in Gegenwart von Polyäthern entstehen (amerikanische Patentschriften 3 383 351, 3 304 273, 3 523 093, 3 110 695, deutsche Patentschrift 1 152 536), sind geeignet, ebenso OH-Gruppen aufweisende Polybutadiene.

Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten um Polythiomischäther, Polythioätherester oder Polythioätheresteramide.

Als Polyacetale kommen z.B. die aus Glykolen, wie Diäthylenglykol, Triäthylenglykol, 4,4'-Dioxäthoxydiphenyldimethylmethan, Hexandiol und Formaldehyd herstellbaren Verbindungen in Frage. Auch durch Polymerisation cyclischer Acetale lassen sich erfindungsgemäß geeignete Polyacetale herstellen.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diäthylenglykol, Triäthylenglykol oder Tetraäthylenglykol mit Diarylcarbonaten, z.B. Diphenylcarbonat, oder Phosgen hergestellt werden können.

Zu den Polyesteramiden und Polyamiden zählen z.B. die aus mehrwertigen gesättigten und ungesättigten Carbonsäuren bzw. deren Anhydriden und mehrwertigen gesättigten und ungesättigten Aminoalkoholen, Diaminen, Polyaminen und ihren Mischungen gewonnenen, vorwiegend linearen Kondensate.

Auch bereits Urethan- oder Harnstoffgruppen enthaltende Polyhydroxylverbindungen sowie gegebenenfalls modifizierte natürliche Polyole, wie Rizinusöl, Kohlenhydrate oder Stärke, sind verwendbar. Auch Anlagerungsprodukte von Alkylenoxiden an Phenol-Formaldehyd-Harze oder auch an Harnstoff-Formaldehydharze sind erfindungsgemäß einsetzbar.

Vertreter dieser erfindungsgemäß gegebenenfalls zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45-71, beschrieben.

Selbstverständlich können Mischungen der obengenannten Verbindungen mit mindestens zwei gegenüber Isocyanaten reaktionsfähigen Wasserstoffatomen mit einem Molekulargewicht von 400 - 10 000, z.B. Mischungen von Polyäthern und Polyestern, eingesetzt werden.

Als erfindungsgemäß gegebenenfalls einzusetzende Ausgangskomponenten kommen auch Verbindungen mit mindestens zwei gegenüber Isocyanaten reaktionsfähigen Wasserstoffatomen von einem Molekulargewicht 32-400 in Frage. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8 gegenüber Isocyanaten reaktionsfähige Wasserstoffatome auf, vorzugsweise 2 oder 3 reaktionsfähige Wasserstoffatome.

BAD ORIGINAL



Als Beispiele für derartige Verbindungen seien genannt: Äthylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Glycerin, Trimethylolpropan, Hexantriol-(1,2,6), Trimethyloläthan, Pentaerythrit, Chinit, Mannit und Sorbit, Diäthylenglykol, Triäthylenglykol, Tetraäthylenglykol, Polyäthylenglykole mit einem Molekulargewicht bis 400, Dipropylenglykol, Polypropylenglykole mit einem Molekulargewicht bis 400, Dibutylenglykol, Polybutylenglykole mit einem Molekulargewicht bis 400, 4,4'-Dihydroxy-diphenylpropan, Di-hydroxymethyl-hydrochinon, Äthanolamin, Diäthanolamin, Triäthanolamin, 3-Aminopropanol, Äthylendiamin, 1,3-Diaminopropan, 1-Mercapto-3-aminopropan, 4-Hydroxy- oder -Amino-phthalsäure, Bernsteinsäure, Adipinsäure, Hydrazin, N,N'-Dimethylhydrazin, 4,4'-Diaminodiphenylmethan, Toluylendiamin, Methylen-bis-chloranilin, Methylen-bis-anthranilsäureester Diaminobenzoesäureester und die isomeren Chlorphenylendiamine.

Auch in diesem Fall können Mischungen von verschiedenen Verbindungen mit mindestens zwei gegenüber Isocyanaten reaktionsfähigen Wasserstoffatomen mit einem Molekulargewicht von 32-400 verwendet werden.

Erfindungsgemäß können jedoch auch Polyhydroxylverbindungen eingesetzt werden, in welchen hochmolekulare Polyaddukte bzw. Polykondensate in feindisperser oder gelöster Form enthalten sind. Derartige modifizierte Polyhydroxylverbindungen werden erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) direkt in situ in den oben genannten, Hydroxylgruppen aufweisenden Verbindungen ablaufen läßt. Derartige Verfahren sind beispielsweise in den Deutschen Auslegeschriften 1 168 075 und 1 260 142, sowie den Deutschen Offenlegungsschriften 2 324 134, 2 423 984, 2 512 385, 2 513 815, 2 550 796, 2 550 797, 2 550 833 und 2 550 862 beschrieben. Es ist aber auch möglich, gemäß US-Patent 3 869 413 bzw. Deutscher Offenlegungsschrift 2 550 860 eine fertige wäßrige Polymerdispersion mit einer Polyhydroxylverbindung zu vermischen und anschließend aus dem Gemisch das Wasser zu entfernen.

Bei der Verwendung von modifizierten Polyhydroxylverbindungen der oben genannten Art als Ausgangskomponente im Polyisocyanat-Polyadditionsverfahren entstehen in vielen Fällen Polyurethankunststoffe mit wesentlich verbesserten mechanischen Eigenschaften.

Wie schon erwähnt, können bei der Herstellung von Polyurethanschaumstoffen erfindungsgemäß leicht flüchtige organische Substanzen als Treibmittel mitverwendet werden. Als organische Treibmittel kommen z.B. Aceton, Äthylacetat, halogensubstituierte Alkane wie Methylenchlorid, Chloroform, Äthyliden—chlorid, Vinylidenchlorid, Monofluortrichlormethan, Chlordifluormethan, Dichlordifluormethan, ferner Butan, Hexan, Heptan oder Diäthyläther infrage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510 beschrieben.

Erfindungsgemäß werden ferner oft Katalysatoren mitverwendet. Als mitzuverwendende Katalysatoren kommen solche der an sich bekannten Art infrage, z.B. tertiäre Amine, wie Triäthylamin, Tributylamin, N-Methyl-morpholin, N-Äthyl-morpholin, N-Cocomorpholin , N,N,N',N'-Tetramethyl-äthylendiamin, 1,4-Diaza-bicyclo-(2,2,2)-octan, N-Methyl-N'-dimethylaminoäthyl-piperazin, N,N-Dimethylbenzylamin, Bis-(N,N-diäthylaminoäthyl)-adipat, N,N-Diäthylbenzylamin, Pentamethyldiäthylentriamin, N,N-Dimethylcyclohexylamin, N,N,N',N'-Tetramethyl-1,3-butandiamin, N,N-Dimethyl-ß-phenyläthylamin, 1,2-Dimethylimidazol, 2-Methylimidazol. Als Katalysatoren kommen auch an sich bekannte Mannichbasen aus sekundären Aminen, wie Dimethylamin, und Aldehyden, vorzugsweise

Formaldehyd, oder Ketonen wie Aceton, Methyläthylketon oder Cyclohexanon und Phenolen, wie Phenol, Nonylphenol oder Bisphenol in Frage.

Gegenüber Isocyanatgruppen aktive Wasserstoffatome aufweisende tertiäre Amine als Katalysatoren sind z.B. Triäthanolamin, Triisopropanolamin, N-Methyl-diäthanolamin, N-Äthyl-diäthanolamin, N,N-Dimethyl-äthanolamin, sowie deren Umsetzungsprodukte mit Alkylenoxiden, wie Propylenoxid und/oder Äthylenoxid.

Als Katalysatoren kommen ferner Silaamine mit Kohlenstoff-Silizium-Bindungen, wie sie z.B. in der deutschen Patentschrift 1 229 290 (entsprechend der amerikanischen Patentschrift 3 620 984) beschrieben sind, in Frage, z.B. 2,2,4-Trimethyl-2-silamorpholin und 1,3-Diäthylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden.

Erfindungsgemäß können auch organische Metallverbindungen, insbesondere organische Zinnverbindungen, als Katalysatoren verwendet werden.

Als organische Zinnverbindungen kommen vorzugsweise Zinn(II)-salze von Carbonsäuren wie Zinn(II)-acetat, Zinn(II)-octoat, Zinn(II)-äthylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht. Selbstverständlich können alle obengenannten Katalysatoren als Gemische eingesetzt werden.

weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Die Katalysatoren werden in der Regel in einer Menge zwischen etwa 0,001 und 10 Gew.-%, bezogen auf die gesamte Polyolkomponente, eingesetzt.

Erfindungsgemäß können bei der Schaumstoffherstellung auch oberflächenaktive Zusatzstoffe, wie Emulgatoren und Schaumstabilisatoren, mitverwendet werden.Als Emulgatoren kommen z.B. die Natriumsalze von Ricinusölsulfonaten oder Salze von Fettsäuren mit Aminen wie ölsaures Diäthylamin oder stearinsaures Diäthanolamin in Frage. Auch Alkali- oder Ammoniumsalze von Sulfonsäuren wie etwa von Dodecylbenzolsulfonsäure oder Dinaphthylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyäthersiloxane, speziell wasserlösliche Vertreter, in Frage. Diese Verbindungen sind im allgemeinen so aufgebaut, daß ein Copolymerisat aus Äthylenoxid und Propylenoxid mit einem Polydimethylsiloxanrest verbunden ist. Derartige Schaumstabilisatoren sind z.B. in den amerikanischen Patentschriften 2 834 748, 2 917 480 und 3 629 308 beschrieben.

Erfindungsgemäß können ferner auch Reaktionsverzögerer, z.B. sauer reagierende Stoffe wie Salzsäure oder organische

Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chloräthylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide mitverwendet werden.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VI, herausgegeben von Vieweg und Höchtlen, Carl-Hanser-Verlag, München 1966, z.B. auf den Seiten 103 bis 113 beschrieben.

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der amerikanischen Patentschrift 2 764 565 beschrieben werden. Einzelheiten über Verarbeitungseinrichtungen, die auch erfindungsgemäß infrage kommen, werden im Kunststoff-Handbuch, Band VI, herausgegeben von Vieweg und Höchtlen, Carl-Hanser-Verlag, München 1966, z.B. auf den Seiten 121 bis 205 beschrieben.

Bei der Schaumstoffherstellung wird erfindungsgemäß die Verschäumung oft in Formen durchgeführt. Dabei wird das Reaktionsgemisch in eine Form eingetragen. Als Formmaterial kommt Metall, z.B. Aluminium, oder Kunststoff, z.B. Epoxidharz, in Frage. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist, es kann aber auch so durchgeführt werden, daß das Formteil eine kompakte Haut und einen zelligen Kern aufweist. Erfindungsgemäß kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z.B. aus den amerikanischen Patentschriften 1 178 490 und 3 182 104 bekannt.

Bei der Formverschäumung werden vielfach an sich bekannte "äußere Trennmittel", wie Siliconöle, mitverwendet. Man kann aber auch sogenannte "innere Trennmittel", gegebenenfalls im Gemisch mit äußeren Trennmitteln, verwenden, wie sie z.B. aus den deutschen Offenlegungsschriften 2 121 670 und 2 307 589 bekanntgeworden sind.

Erfindungsgemäß lassen sich auch kalthärtende Schaumstoffe herstellen (vgl. britische Patentschrift 1 162 517, deutsche Offenlegungsschrift 2 153 086).

Selbstverständlich können aber auch Schaumstoffe durch Blockverschäumung oder nach dem an sich bekannten Doppeltransportbandverfahren hergestellt werden.

Ein weiterer technisch interessanter Anwendungszweck der erfindungsgemäßen Mischungen aus Formose und Aminoplastmonomeren sind Imprägnierungen und Matrizenreaktionen an vorgebildeten Polyurethan-Schaumstoffen, wie sie z.B. in den deutschen Offenlegungsschriften 1 911 643, 1 911 644, 1 911 645, 1 953 347, 2 031 160 und 2 037 613 sowie in dem Sammelreferat von K. Wagner und M. Dahm in "Die Angewandte Chemie", Heft 21, 84 (1972), Seite 1001-1008, beschrieben werden. Man läßt zu diesem Zweck vorgefertigte Polyurethan-Weichschaumblöcke in den erfindungsgemäßen Mischungen quellen, wobei die Zellstruktur des Schaumstoffs zum Teil aufgebrochen wird, quetscht dann überschüssige Flüssigkeit ab und fixiert das in der Polyurethan-Matrix verbleibende Gemisch irreversibel durch eine geeignete Härtungsreaktion, beispielsweise durch Reaktion der Urethangruppen mit den Methylolgruppen der Aminoplastmonomeren oder durch eine Beladung der Matrix in einem zweiten Quellungsvorgang mit einem flüssigen Isocyanat und anschließende Reaktion des Isocyanates mit den Hydroxylgruppen der Formose. Man erhält auf diese Weise modifizierte Weichschaumstoffe von hoher Flammwidrigkeit.

Erfindungsgemäße Gemische aus Formosen und N-methylolierten Aminoplastmonomeren und ihre Kondensate sind auch hervorragende Bindemittel für Sägespäne, Holzabfälle und andere Zellulose oder Proteine enthaltende Biomassen und können daher, gegebenenfalls im Gemisch mit den oben erwähnten Polyisocyanaten, für die Herstellung von Spanplatten eingesetzt werden.

Wie schon eingangs erwähnt, bilden die erfindungsgemäßen Gemische aus Formose und Aminoplastmonomeren lagerstabile

BAD ORIGINAL



Mischungen mit Wasserglas (Natrium- bzw. Kaliumsilikat). Im allgemeinen setzt man dabei 100 Gew.-Teilen des erfindungsgemäßen Gemisches ca. 10-100 Gew.-Teile Wasserglas zu. Derartige Gemische sind ebenfalls Gegenstand der vorliegenden Erfindung und eignen sich vorzüglich als Bindemittel aber auch als Ausgangskomponente für die Herstellung von anorganischorganischen Schaumstoffen durch Umsetzung mit Polyisocyanaten bzw. mit Isocyanatgruppen aufweisenden Präpolymeren nach den Verfahren der deutschen Offenlegungsschriften 1 770 384, 23 59 606, 23 59 607, 23 59 608, 23 59 609, 23 59 610 und 23 59 611.

Selbstverständlich können die erfindungsgemäßen Gemische aus Formosen und Aminoplastmonomeren, gegebenenfalls im Gemisch mit Phenoplastbildnern und/oder zusätzlichen Aldehyden bzw. Ketonen wie Formaldehyd, n-Butyraldehyd, Isobutyraldehyd, Aceton, Benzophenon etc., auch als Ausgangskomponenten für die Herstellung von Aminoplastharzen dienen.

Bei der Herstellung von durch Polyhydroxylverbindungen modifizierten (weichgemachten) Aminoplastkondensaten aus den erfindungsgemäßen Mischungen können in Abhängigkeit der Funktionalität der eingesetzten Komponenten niedermolekulare, oligomere und hochmolekulare, ferner stark verzweigte und gegebenenfalls vernetzte unlösliche Kondensate hergestellt werden. Die Kondensationsgrade sind durch die Funktionalitäten der Aminoplastmonomeren und den Gehalt der Gemische an Carbonylgruppen und insbesondere an N-Methylolverbindungen bestimmt. Um wasserlösliche, bzw. wasserdispergierbare, relativ niedermolekulare Kondensate bis zu einem Molekulargewicht von 10 000, bevorzugt zwischen 240 - 2 000, zu erhalten, soll die Summe aller OH-Gruppenäquivalente (inklusive phenolischer OH-Gruppenäquivalente) zur Summe aller Carbonylgruppenäquivalente und N-Methylolgruppenäquivalente bevorzugt 5:1 bis 5:3,5 betragen. Hierbei arbeitet man bevorzugt im pH-Bereich von 3-5,5 bei Raumtemperatur oder Temperaturen bis 120°C, bevorzugt bei 40-60°C, unter gleichzeitiger Entfernung von Lösungs- und Kondensationswasser. Bevorzugte Säuren sind Schwefelsäure, Phosphorsäure und Borsäure, besonders bevorzugt sind Kombinationen von Borsäure mit den genannten anorganischen Säuren oder mit organischen Säuren wie Essigsäure, Chloressigsäure, Trichloressigsäure, Maleinsäure etc. Die Kondensationen bzw. partiellen Kondensationreaktionen können aber auch rein thermisch bzw. auch in Gegenwart kataly/tischer Mengen an anorganischen oder organischen Basen, allerdings wesentlich verlangsamt, ausgeführt werden, wobei Umlagerungsreaktionen der Formosen und Zersetzungsreaktionen der Zucker weitgehend unbekannter Art stärker ins Gewicht fallen.

Sofern man hochmolekulare vernetzte, unlösliche harte Massen, unlösliche Gele oder humusartige, gut filtrierbare Kondensate herstellen will, ist es empfehlenswert, daß die Summe aller OH-Äquivalente zur Summe aller Carbonyl- und N-Methylolgruppenäquivalente 1:1 bis 1:4 beträgt, wobei ebenfalls zwecks rascherem Ablauf der Aminoplastkondensation pH-Werte von 1-5, gegebenenfalls unter Entfernung von Kondensation- und Lösungswasser im Vakuum, eingehalten werden.

Die erfindungsgemäßen Gemische aus Formose und ggf. N-methylolierten Aminoplastbildnern bzw. die daraus durch

saure oder basische Nachbehandlung oder durch Maillard-Reaktion erhaltenen modifizierten Produkte sind auch hervorragende Co-Katalysatoren für die Herstellung von Formose durch Kondensation von Formaldehyd nach den eingangs beschriebenen neuen Verfahren der Anmelderin. Die Produkte eignen sich darüber hinaus auch als Abmischkomponente für die oben beschriebenen höhermolekularen Polyhydroxylverbindungen und führen, wie gefunden wurde, zu einer besseren Verträglichkeit verschiedener derartiger Polyole untereinander bzw. mit den übrigen Komponenten einer Polyurethan-Rezeptur, insbesondere dann, wenn die Formose/Aminoplastmonomer-Gemische durch saure Nachbehandlung unter O-N-Aminalbildung modifiziert werden.

Die folgenden Beispiele erläutern die vorliegende Erfindung. Sofern nicht anders vermerkt, sind Mengenangaben als Gewichtsteile bzw. Gewichtsprozente zu verstehen.

Beispiel 1

In 2860 g einer 37 %igen wäßrigen Formaldehydlösung werden 81 g eines etwa 36 %igen Formosesirups (identisch mit dem in Beispiel 1 von DOS 2 639 084 verwendeten Cokatalysator) als Cokatalysator für die Formose-Synthese gelöst und anschließend 676 g Harnstoff (11,2 Mol) unter gutem Rühren zugegeben. Infolge des großen Überschusses an Formaldehyd (ca. 35 Mol, bezogen auf eingesetzten Harnstoff) setzen schon bei Raumtemperatur sofort unter Formaldehydabnahme N-Methylolierungsreaktionen zu Monomethylolharnstoff, N,N'-Dimethylolharnstoff und höher methyloliertem Harnstoff ein. Durch Zugabe von 6 g Kaliumcarbonat bei pH 8,3 und 50°C wird im Verlaufe von 15 Minuten die N-Methylolierung vervollständigt. Die Mischung wird nun mit 20 g Blei-(II)-acetat versetzt und auf 90°C erhitzt. Bei dieser Temperatur wird durch fortlaufende Zugabe von 10 %iger Natronlauge die Reaktionsmischung 8 Stunden bei einem pH-Wert von 6,7 bis 6,8 gehalten. Nach dieser Zeit sind - wie die Analyse von Parallelproben zeigt - die primär gebildeten N-Methylolverbindungen des Harnstoffs nahezu quantitativ in Formose und freien Harnstoff umgewandelt worden. Die erkaltete Lösung wird zunächst an einem handelsüblichen sauren Ionenaustauscher von Pb-(II)-Ionen und dann an einem basischen Ionenaustauscher von Essigsäure und durch gekreuzte Cannizzaro-Reaktion entstandenen Säuren (Ameisensäure, Milchsäure etc.) befreit.

Nach Entfernung der Hauptmenge Wasser im Dünnschichtverdampfer bei 50°C u. 16 Torr erhält man in einer Ausbeute von 1995 g ein etwa 15 Gew.-% Wasser enthaltendes Formose-Harnstoff-Gemisch, das die überraschend niedrige Viskosität von nur 650 m Pas bei 25°C besitzt, während eine analog hergestellte Harnstoff-freie Formose mit dem gleichen Wassergehalt eine Viskosität von 4100 mPas 25°C aufweist. Die erfindungsgemäße Mischung aus Formose/Aminoplastmonomer

und Wasser (im folgenden "Mischung A" genannt) enthält etwa 51,7 Gew.-% Formose, 33,6 Gew.% Harnstoff und 14,6 Gew.- % Wasser und ist in besonderem Maße zur Herstellung neuer, äußerst flammwidriger, offenporiger, stark carbonisierender Polyurethan-Hartschaumstoffe geeignet.

In der Mischung A stehen die Molzahlen der Einzelkomponenten in folgendem Verhältnis : 1 Mol Formose: 1,8 Mol Harnstoff : 2,6 Mol Wasser.

Die Mischung A ist auch ein hochwirksamer Cokatalysator für die Herstellung von Formose, z.B. aus Formalinlösungen beliebiger Konzentrationen in Gegenwart der üblichen Katalysatoren oder durch Umwandlung des Formaldehyds in Synthesegasen von großtechnischen Formaldehyd-Produktionsanlagen in Formosen gemäß der Verfahrensweise der deutschen Patentanmeldungen P27 21 093.1 und P 27 21 186.5.

Die in Mischung A enthaltene Formose weist einen Zuckergehalt von 36,4%, berechnet als Glucose vom Molekulargewicht 180, auf. Eine Aminoplastmonomer-freie, analog dazu hergestellte Vergleichslösung von Formose hat einen Zuckergehalt von 36,3 Gew.-%, bezogen auf Glucose vom Molekulargewicht 180. Dieser Befund zeigt, daß in der erfindungsgemäßen Mischung A zwischen dem Harnstoff und den Aldo- und Ketofunktionen der Formose im wesentlichen keine Kondensationsreaktionen abgelaufen sind.

Die in Mischung A vorliegende Formose hat folgende Komponentenverteilung:

$C_2$- Anteile : 0,5 Gew.-%
$C_3$- Anteile : 2,5 Gew.-%
$C_4$- Anteile : 4,7 Gew.-%
$C_5$-Anteile : 25,2 Gew.-%
$C_6$-Anteile : 46,2 Gew.-%
$C_7$-Anteile und
höhermolekulare Anteile : 21,8 Gew. %

Die OH-Zahl der Formose beträgt bei einem Wassergehalt von ca. 4 Gew.% 1510, ihr mittleres Molekulargewicht 166 und ihre mittlere OH-Funktionalität 4,68.

Beispiel 2

Man verfährt analog zu Beispiel 1, ersetzt aber das Blei - (II) - acetat, das Kaliumcarbonat und die Natronlauge durch insgesamt 70 g Calcium-hydroxid und führt die Kondensationsreaktion in Gegenwart der in Beispiel 1 genannten Menge an Harnstoff bei pH = 8,5-9 durch. Nach Aufarbeitung und Vollentsalzung gemäß Beispiel 1 erhält man eine sehr dünnviskose Mischung aus 51,2% Formose, 33,8 % Harnstoff und ca. 15 % Wasser mit einer Viskosität von lediglich 580 mPas bei 25°C; der Zuckergehalt beträgt etwa 16,8 Gew.-%, bezogen auf Glucose vom Molekulargewicht 180. Der erniedrigte Zuckerwert ist auf die verstärkte gekreuzte Cannizzaro-Reaktion während der Calciumhydroxid-katalysierten Formaldehydkondensation zurückzuführen.

Die in der Mischung enthaltene Formose hat folgende Komponentenverteilung:

| | | | |
|---|---|---|---|
| $C_2$-Anteile | : | 1,16 | Gew.-% |
| $C_3$-Anteile | : | 2,47 | Gew.-% |
| $C_4$-Anteile | : | 10,08 | Gew.-% |
| $C_5$-Anteile | : | 8,01 | Gew.-% |
| $C_6$-Anteile | : | 28,25 | Gew.-% |
| $C_7$-Anteile | : | 50,03 | Gew.-% |

Das mittlere Molekulargewicht der Formose beträgt 147, die mittlere OH-Funktionalität ca. 4,1, die OH-Zahl 1485 und der Zuckergehalt 37,8, bezogen auf Glucose vom Molekulargewicht 180. Aus dem kleinen Zuckerwert folgt, daß ca. 62,2 % aller Aldehyd- und. Ketofunktionen der Formose durch gekreuzte Cannizzaro-Reaktionen mit Formaldehyd zu Hydroxylgruppen reduziert worden sind.

b) Man verfährt wie unter a) beschrieben, verzichtet jedoch auf die Entsalzung der Formose/Harnstoff-Mischung. Nach Filtration von Spuren an Calciumformiat und Entwässerung auf einen Restwassergehalt von 15 % zeigt sich überraschenderweise, daß in der Formose/Harnstoff-Mischung (Ausbeute 2130 g) etwa 6,9 Gew.-% des in Wasser schwerlöslichen Calciumformiats in Lösung gehalten werden.

Beispiel 3

Dieses Beispiel zeigt, daß man erfindungsgemäße Mischungen

mit niedriger Viskosität auch durch einfaches Auflösen von Aminoplastmonomeren in Formose herstellen kann.

a) 1024 Gew. Teile einer 50%igen Formose-Lösung werden mit 338 Gew.-Teilen Harnstoff bei 25°C unter Rühren gemischt, wobei sich der Harnstoff rasch auflöst. Man entfernt Wasser aus der Mischung im Dünnschichtverdampfer bei 15 Torr u. 55°C bis zu einem Wassergehalt von 15 % und erhält eine Mischung aus 51,2 Gew. % Formose, 33,8 Gew.-% Harnstoff und 15 Gew.-% Wasser mit einer Viskosität von nur 610 mPas bei 25°C.

Die verwendete Formose wurde gemäß Beispiel 2 der deutschen Patentanmeldung P 27 14 104.4 hergestellt und besitzt folgende Komponentenverteilung:

| | |
|---|---|
| $C_2$-Anteile | : 16,8 Gew.-% |
| $C_3$-Anteile | : 21,0 Gew.-% |
| $C_4$-Anteile | : 29,9 Gew.-% |
| $C_5$-Anteile | : 25,1 Gew.-% |
| $C_6$-Anteile | : 7,2 Gew.-% |

Mittleres Molekulargewicht: 104;
mittlere OH-Funktionalität: 2,3

b) Man verfährt gemäß a), ersetzt aber den dort verwendeten Harnstoff durch 338 Gew.-Teile Thioharnstoff. Die Viskosität der 15% Wasser enthaltenden Mischung beträgt 540 mPas bei 25°C.

c) Man verfährt wie unter a) beschrieben, verwendet aber eine Formose mit folgender molekularer Verteilung:

| | | |
|---|---|---|
| $C_2$-Anteile | : | 3,3 Gew.-% |
| $C_3$-Anteile | : | 7,4 Gew.-% |
| $C_4$-Anteile | : | 16,5 Gew.-% |
| $C_5$-Anteile | : | 36,0 Gew.-% |
| $C_6$-Anteile | : | 27,0 Gew.-% |
| $C_7$-Anteile | : | 8,6 Gew.-% |
| $C_8$-Anteile | : | 1,2 Gew.-% |

Mittleres Molekulargewicht: 158;
mittlere OH-Funktionalität: 4,14;
Zuckergehalt, bezogen auf Glucose vom Molekulargewicht 180 : 70 Gew. -%

Die Viskosität der 15 Gew.-% Wasser enthaltenden Formose/Harnstoff-Mischung beträgt 179 mPas bei 25° C.

Die verwendete Formose wurde nach Beispiel 1 der DOS 26 39 084 im Rahmen eines verzehnfachten halbtechnischen Ansatzes hergestellt, jedoch mit dem Unterschied, daß die Formose-Bildung bei einem Restgehalt von 1,7 % Formaldehyd anstatt 1,3 % Formaldehyd abgebrochen wurde und daß die Blei- und Kaliumionen mittels eines sauren, handelsüblichen Kationenaustauschers entfernt wurden, anstatt die Blei-Ionen mit Kaliumcarbonat zu fällen. Durch diese Maßnahme wurde die Formoselösung vollständig von Blei- und Kalium-Ionen befreit.

Beispiel 4

Man wiederholt Beispiel 3 c) mit dem Unterschied, daß Harnstoff durch

a) 338 Gew.-Teile Dicyandiamid
b) 338 Gew.-Teile $\varepsilon$-Caprolactam

ersetzt wird. Ansonsten verfährt man bei der Einkonzentrierung der Mischungen wie in Beispiel 3 a).

Die Viskosität der 15 Gew.-% Wasser enthaltenden Mischungen beträgt:

a) 650 mPas bei 25°C
b) 330 mPas bei 25°C

Beispiel 5

Dieses Beispiel zeigt, daß auch N-Methylolcaprolactam als kristallisierte und definierte Verbindung bei der Verfahrensweise nach Beispiel 1 den in Form der Methylolgruppe gebundenen Formaldehyd überraschend leicht abgibt, wobei dieser in Formose umgewandelt wird. Die Formose-$\varepsilon$-Caprolactam-Mischungen zeichnen sich durch eine besonders geringe Viskosität aus und besitzen eine hohe Reaktivität gegenüber Polyisocyanaten.

Man verfährt analog zu Beispiel 1, ersetzt aber die 676 g Harnstoff durch 856 g an frisch

hergestelltem, kristallisiertem N-Methylol-caprolactam (6 Mol), verwendet 2375 g einer 37 %igen wäßrigen Formalinlösung und verzichtet auf das in erster Phase zugesetzte Kaliumcarbonat als N-Methylolierungskatalysator.

Die Viskosität der erfindungsgemäßen Formose-ε-Caprolactam-Mischung beträgt bei einem Wassergehalt von 15 Gew.-% 415 mPas bei 25°C.

Die auf 3,5 Gew. % Wasser entwässerte Mischung hat bei 35°C lediglich eine Viskosität von 5670 mPas. Derartige Mischungen sind hochwirksame Katalysatoren bei der Herstellung von Polyurethan-Weich- und Hartschaumstoffen.

Beispiel 6

Zunächst wird gemäß Beispiel 1 von DOS 2639084 eine Formose der dort angegebenen molekularen Verteilung hergestellt. Das erhaltene Zuckergemisch dient als Cokatalysator für die nachfolgenden Formose-Synthesen in Gegenwart von Aminoplast-Monomeren:

Man verfährt analog zu Beispiel 1, ersetzt jedoch den Harnstoff durch folgende Aminoplast-Monomere:

a) 676 g Dicyandiamid
b) 676 g N,N-Dimethylharnstoff
c) 676 g Äthylenharnstoff der Konstitution

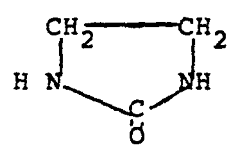

d) 676 g N,N-Diäthylharnstoff

e) 219 g Melamin

f) 219 g Oxamid

Die entstehenden Gemische der vorgenannten Aminoplast-Monomeren mit Formose werden auf einen Wassergehalt von etwa 15 Gew.-% eingeengt. Man erhält in allen Fällen mit Ausnahme von e) u. f) bei Raumtemperatur wasserdünne Mischungen mit Viskositäten unter 800 mPas bei 25°C. Lediglich die Mischung e) neigt bei Raumtemperatur zur Kristallisation, infolge der extrem geringen Löslichkeit des Melamins.

Beispiel 7

Man verfährt wie in Beispiel 1, verwendet aber 286 Gew.-Teile einer 37%igen wäßrigen Formaldehydlösung, 8,1 Gew. Teile des 36%igen wäßrigen Formosesirups als Cokatalysator, 0,7 Gew.-Teile Kaliumcarbonat als Methylolierungskatalysator und 2 Gewichtsteile Blei-(II)-acetat als Formose-Katalysator. Die Kondensationsreaktion wird in Gegenwart folgender Verbindungen ausgeführt:

a) 68 - Gew. Teile Imidazol

b) 68 - Gew. Teile 1,2,4-Triazol

c) 68 - Gew. Teile 4-Amino-triazol

d) 68 - Gew. Teile eines Diurethans der Formel

$$H_2N-\underset{\underset{O}{\|}}{C} - O - CH_2-CH_2- O-CH_2-CH_2-O-CH_2-CH_2-O-\underset{\underset{O}{\|}}{C}-NH_2$$

e) 68 Gew.-Teile Formamid
f) 68 Gew.-Teile Pyrrolidon- (2)
g) 68 Gew.-Teile Guanidin-carbonat.

Reaktionsdauer und Aufarbeitung entsprechen bei allen Varianten a) bis g) den Bedingungen des Beispiels 1. Die etwa 15 % Wasser enthaltenden Formose/Aminoplastmonomer-Mischungen der Zusammensetzungen a) bis g) stellen bei 25°C relativ niederviskose Mischungen dar.

Beispiel 8

Dieses Beispiel zeigt, daß durch einfache Abmischung von Formosen mit vorgebildetem
a) N-Methylolcaprolactam bzw.
b) N-Methylolpyrrolidon
ebenfalls in einfacher Weise erfindungsgemäße Mischungen aus Formosen und N-methylolierten Aminoplastmonomeren mit stark verminderter Viskosität, bezogen auf die eingesetzte Formose, hergestellt werden können.

In jeweils 500 g einer 50 %igen wäßrigen, vollentsalzten Formose-Lösung, welche gemäß Beispiel 1 der DOS 2 639 084 hergestellt wurde, werden
a) 429 g N-Methylolcaprolactam (3 Mol) der Konstitution

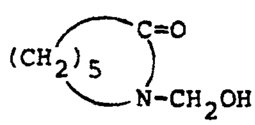

b) 303 g N-Methylolpyrrolidon (3 Mol) der Konstitution

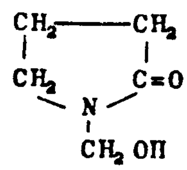

bei Raumtemperatur gelöst. Anschließend engt man die erhaltenen Mischungen a) und b) im Rotationsverdampfer bei 55°C und 15 Torr auf einen Wassergehalt von 1,5 Gew.-% ein. Man erhält überraschend niederviskose Formose-N-Methylolaminoplastmonomer-Mischungen:

a) $\eta_{35^\circ C}$ = 4700 mPas
$\eta_{25^\circ C}$ = 17600 mPas

b) $\eta_{35^\circ C}$ = 4300 mPas
$\eta_{25^\circ C}$ = 16900 mPas

Die Viskosität der verwendeten Ausgangsformose bei einem Wassergehalt von 1,5 % ist weder bei 25° noch bei 35°C meßbar und liegt weit über 500 000 mPas.

Beispiel 9

Dieses Beispiel beschreibt in den Varianten a) bis d) die Herstellung interessanter N-Methylol- und N-Polymethylolverbindungen in vorgegebenen Formosen und zeigt die außergewöhnlich niedrige Viskosität der so erhaltenen erfindungsgemäßen Mischungen.

Jeweils 500 g einer 50%igen wäßrigen Formoselösung, wie sie gemäß Beispiel 1 von DOS 26 39 084 erhalten wurde, werden in vollentsalzter Form (d.h. in Abwesenheit von Formose-Katalysatoren) mit 300 g einer 30%igen Formalinlösung gemischt (3 Mol Formaldehyd). Anschließend löst man in dieser Mischung

a) 1,8 g Kaliumcarbonat und
228 g Thioharnstoff (3 Mol)

b) 1,8 g Kaliumcarbonat und
180 g Harnstoff (3 Mol)

c) 1,8 g Kaliumcarbonat und
339 g ε-Caprolactam (3 Mol)

d) 1,5 g Kaliumcarbonat und
63 g Melamin (0,5 Mol)

und führt die N-Methylolierung im Verlaufe von 20 Minuten bei 55°C, im Falle von d) bei 70°C durch.

Anschließend engt man die erhaltenen Mischungen a) bis c) im Rotationsverdampfer bei 55°C und 15 Torr ein. Man erhält überraschend niederviskose Mischungen in folgenden Ausbeuten und mit folgenden Viskositäten:

a) 614 g einer Mischung von 41,4 % Formose, 8 % Wasser und 50,6 % $H_2N-\underset{\overset{\|}{S}}{C}-NH-CH_2OH$

$\eta$ 35°C = 957 mPas; $\eta$ 25°C = 2413 mPas

b) 561 g einer Mischung von 44 % Formose, 8 % Wasser und 48 % N-Methylolharnstoff;

$\eta$ 35°C = 16140 mPas; $\eta$ 25°C = 72633 mPas

c) 687 g einer Mischung aus 62,2 % N-Methylol-caprolactam 36,3 % Formose und 1,5 % Wasser;

$\eta$ 35°C = 4576 mPas; $\eta$ 25°C = 17305 mPas

Obwohl bei der Variante c) etwa 62 Gew.-% des bei Raumtemperatur kristallinen N-Methylolcaprolactams entstanden sind, zeigt die erfindungsgemäße Mischung eine bewerkenswert niedrige Viskosität gegenüber der nichtmodifizierten Formose, deren Viskosität bei 35°C und gleichem Wassergehalt von 1,5 % nicht meßbar ist ( nichtgießbares Zuckergemisch).

Bei einem mittleren Molekulargewicht der verwendeten Formose von etwa 16 6 betragen die Molzahlverhältnisse in den erfindungsgemäßen Mischungen:

a) 1 Mol Formose, 2 Mol Monomethylolthioharnstoff und 1,8 Mol Wasser;

b) 1 Mol Formose, 2 Mol Monomethylolharnsotff und 1,6 Mol Wasser;

c) 1 Mol Formose, 2 Mol N-Methylolcaprolactam und 0,54 Mol Wasser;

Im Falle der Bildung von Hexamethylolmelamin in der Formoselösung zeigt das erfindungsgemäße Gemisch bereits bei Raumtemperatur Kristallisationstendenz, da bekanntlich Hexamethylolmelamin bei Raumtemperatur in Wasser schwer löslich ist.

Der Ansatz d) wird bei pH = 6 mit Borsäure als Katalysator 30 Min. auf 90°C erwärmt, wobei Verätherungsreaktionen der Hydroxylgruppen der Formosen mit den N-Methylolgruppen des Hexamethylolmelamins ablaufen. Nach dem Abkühlen erhält man eine klare, lagerbeständige, nicht kristallisierende Lösung, in der O, N-Acetale der Zucker mit Melamin vorliegen. Die Viskosität der nichteingedampften Lösung bei 25°C beträgt 95 mPas.

Die Einengung der Lösung führt zu einem klaren, durchsichtigen Festharz mit klebenden Eigenschaften für Holz bzw. Sägemehl, welches z.B. bei der Spanplattenerzeugung als Holzbindemittel verwendet werden kann.

In den erfindungsgemäßen Mischungen vorliegende monofunktionelle N-Methylolverbindungen führen bei Isocyanatreaktionen auf Grund von Versuchen der Anmelderin gemäß nachstehendem Formelschema, z.B. bei der Schaumstoff-Herstellung, primär zur Urethanbildung und interessanterweise bei Temperaturen über 100°C zu einer zusätzlichen Decarboxylierungs- und Treibreaktion (=verkappte Treibmittel), so daß also die N-Monomethylolverbindungen zu bifunktionellen Reaktivpartnern gegenüber Isocyanaten werden, da durch die Decarboxylierung ein neues basisches, reaktives, additionsfähiges Zentrum geschaffen wird:

a) und b)

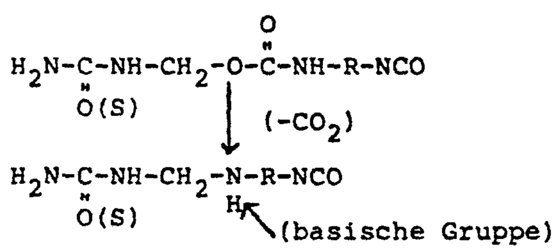


c)

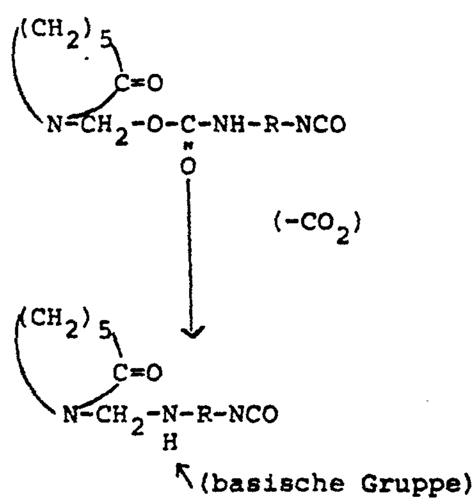

Beispiel 10

Man verfährt wie in Beispiel 9 unter a) bzw. b) beschrieben, verwendet aber jeweils 600 g der 30 %igen Formalinlösung (6 Mol). Man engt die Lösungen unter Zusatz von 0,5 g Essigsäure bei einem pH-Wert von 5,4 auf einen Wassergehalt von ca. 40 Gew.-% ein. Bei diesem pH-Wert setzen bereits Verätherungsreaktionen zwischen den OH-Gruppen der Formose und den N-Methylolgruppen ein und man erhält eine dünnviskose Lösung, in der neben den Ausgangskomponenten die Formosen über ihre OH-Gruppen gemäß nachstehender idealisierter Strukturformel partiell veräthert sind, wobei sich N-Methyloläthergruppen ausbilden:

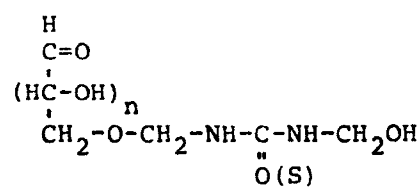

n = O - 7

Die so hergestellten erfindungsgemäßen Aminoplast-Kondensat-Mischungen können z.B. ebenfalls bei der Spanplattenerzeugung als Bindemittel verwendet werden.

Beispiel 11

Dieses Beispiel beschreibt eine weitere Möglichkeit zur Herstellung von erfindungsgemäßen Mischungen, indem man die Formose - Synthese zunächst in Abwesenheit von Aminoplastmonomeren etwa bis zu einem Umsatz von ca. 73,5 %, bezogen

auf eingesetzten Formaldehyd, durchführt und den restlichen Formaldehyd durch Zusatz der Aminoplastbildner in Gegenwart von basischen N-Methylolierungskatalysatoren wie NaOH, KOH, Calciumhydroxid oder tertiären Aminen bindet.

950 g einer 37 %igen wäßrigen Formaldehydlösung werden wie in Beispiel 1 beschrieben mit 40 g eines wäßrigen 50 %igen Formosesirups als Cokatalysator und 8 g Bleiacetat als Katalysator bei pH = 6,7 bis 6,5 durch Zugabe von 10 %iger Natronlauge innerhalb von 20 Minuten bei 99°C bis zu einem Restgehalt von 9,75 Gew.-% Formaldehyd umgesetzt. Hierauf wird das Reaktionsgemisch sofort unter 45°C abgekühlt, gegebenenfalls entsalzt und bei dieser Temperatur, bei der keine Formose-Bildung abläuft, die noch in der Lösung vorliegenden 89 g an freiem Formaldehyd (ca. 3 Mol) durch Zugabe

a) von 180 g Harnstoff (3 Mol) und 1,5 g Dimethylbenzylamin;
b) von 339 g ε-Caprolactam (3 Mol) und 1,8 g Endoäthylenpiperazin

im Verlauf von 10 Minuten unter N-Methylolierung abgebunden und die N-Methylolierung durch Wasserentfernung im Dünnschichtverdampfer bei 45°C und 14 Torr zu Ende geführt.

Da bei dem frühzeitigen Abbruch der Formose-Bildung bei einem Restgehalt von fast 10 % Formaldehyd Formosegemische mit wesentlich reduziertem mittleren Molekulargewicht (ca. 100) erhalten werden, ist die Viskosität der erfindungsgemäßen Mischungen a) und b) besonders niedrig und beträgt bei 35°C:

a) 7500 mPas (Wassergehalt: ca. 8 Gew.-%)

b) 2300 mPas (Wassergehalt: ca. 1,5 Gew.-%)

Beispiel 12

Dieses Beispiel zeigt, daß durch einfaches Abmischen von

a) α-aldolisierter Formose

b) α-aldolisierter Formose + D-Glucose (1:1)

c) α-aldolisierter Formose + natürlichem Invertzucker (1:1)

d) α-aldolisierter Formose + Rohrzucker (1:1)

e) α-aldolisierter Formose + Maisstärkehydrolysat (1:1)

mit N-Methylolcaprolactam die Viskosität stark erniedrigt wird.

Herstellung der α-aldolisierten Formose und Herstellung der erfindungsgemäßen Mischungen im Eintopfverfahren

a) 500 g einer vollentsalzten, 50 Gew.-% Formose enthaltenden wäßrigen Lösung, die gemäß Beispiel 1 der DOS 2 639 084 hergestellt wurde [250 g Formose-Feststoff (ca. 1,5 Mol) bei einem mittleren Molekulargewicht von ca. 166], werden mit 150 g einer 30 %igen Formalinlösung (ca. 1,5 Mol Formaldehyd) und 10 g Triäthylamin vermischt. Man heizt unter Rühren auf 85°C auf und verfolgt die Formaldehydabnahme durch Titration mit Natriumsulfit. Bereits nach 45 Minuten ist der Formaldehydgehalt in der Lösung von ca. 6,7 % auf 0,5 % abgesunken und die α-Aldolisierung beendet. Man klärt die heiße Lösung durch Zugabe von 8 g Aktivkohle, filtriert und erhält eine lediglich leicht gelbstichig gefärbte Lösung, in der vorwiegend α-aldolisierte

Formosen der nachstehenden idealisierten Konstitutionen vorliegen:

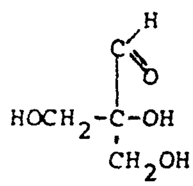

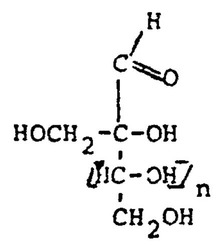

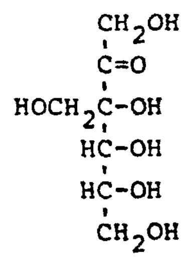

n = 1-7

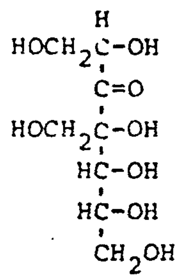

Durch diese gezielte α-Aldolisierung werden Formosen erhalten, die pro Molekül im Mittel mindestens zwei primäre Hydroxylgruppen enthalten und gegenüber Polyisocyanaten eine höhere Reaktivität aufweisen als die Ausgangsformosen.

a) Die so erhaltene Lösung wird auf 40°C abgekühlt, in ihr werden bei pH = 6,5 429 g N-Methylol-caprolactam (3 Mol) gelöst. Anschließend engt man die erhaltene Mischung im Rotationsverdampfer bei 55°C und 15 Torr auf einen Wassergehalt von 2,9 Gew.-% ein. Man erhält eine überraschend niedrigviskose Mischung aus α-aldolisierter Formose und N-Methylolcaprolactam mit einer Viskosität von 3500 mPas/35°C.

b) Man verfährt wie bei a), löst aber in der α-aldolisierten Formose erst 250 g D-Glucose und anschließend 858 g (6 Mol) N-Methylolcaprolactam. Nach Einkonzentrierung der Lösung gemäß a) auf ca. 2,9 Gew.-% Wassergehalt erhält man ein Produkt mit einer Viskosität von 6700 mPas/35°C.

c) Man verfährt wie bei a), löst aber in der α-aldolisierten Formose erst 250 g natürlichen Invertzucker (Bienenhonig) und anschließend 858 g (6 Mol) N-Methylolcaprolactam. Nach Einkonzentrierung der Lösung gemäß a) auf ca. 2,9 Gew.-% Wassergehalt erhält man ein Produkt mit einer Viskosität von 5600 mPas/35°C.

d) Man verfährt wie bei a), löst aber in der α-aldolisierten Formose erst 250 g Rohrzucker und anschließend 858 g (6 Mol) N-Methylolcaprolactam. Nach Einkonzentrierung der Lösung gemäß a) auf ca. 2,9 Gew.-% Wassergehalt erhält man ein Produkt mit einer Viskosität von 9800 mPas/35°C.

e) Man verfährt wie bei a), löst aber in der α-aldolisierten Formose erst 250 g eines handelsüblichen, enzymatisch hergestellten Zuckergemisches aus Maisstärke und anschließend 858 g (6 Mol) N-Methylolcaprolactam. Nach Einkonzentrierung der Lösung gemäß a) auf ca. 2,9 Gew.-% Wassergehalt erhält man ein Produkt mit einer Viskosität von 6100 mPas/35°C.

Die nach Variante a) bis e) hergestellten erfindungsgemäßen Mischungen sind wegen ihres erhöhten Gehaltes an primären alkoholischen Gruppen (ca. 2 primäre OH-Äquivalente in der α-aldolisierten Formose bei einem mittleren Molekulargewicht von ca. 198) zur Herstellung von harten Polyurethanschaumstoffen von besonderem Interesse. Durch Abmischung

mit Diäthylphosphit oder Dimethylphosphit im Gewichtsverhältnis 2:1 werden Mischungen mit stark verminderten Viskositäten erhalten, die wertvolle Zusatzmittel bei der Herstellung von flammwidrigen Polyurethanschaumstoffen darstellen.

Beispiel 13

Dieses Beispiel zeigt, daß durch einfaches Auflösen von Harnstoff in einer wäßrigen Lösung von Formose des mittleren Molekulargewichtes 166 gemäß Beispiel 1 der DOS 2 639 084 erfindungsgemäße Mischungen mit stark verminderten Viskositäten erhalten werden.

a) Man löst in 332 g der genannten 50 %igen wäßrigen Formoselösung, die 1 Mol Formose vom mittleren Molekulargewicht 166 enthält, 1,23 Mol Harnstoff und dampft die Lösung im Rotationsverdampfer bei 55°C und 15 Torr auf einen Wassergehalt von 3,9 % ein. $\eta_{35^\circ C}$ = 80990 mPas.

Die Viskosität der Ausgangsformose ist bei einem Wassergehalt von 3,9 % so hoch, daß sie bei 35°C nicht bestimmt werden kann.

In diesem Beispiel stehen die Molzahlen der Komponenten etwa in folgendem Verhältnis zueinander und es liegen folgende Konzentrationen der Komponenten in der Mischung vor: 1 Mol Formose : 1,23 Mol Harnstoff : 0,51 Mol $H_2O$ ;
Konzentrationen: ca. 66,7 % Formose, 29,6 % Harnstoff, 3,7 % Wasser

b) Man verfährt wie bei a) und stellt eine Mischung her, in welcher die Molzahlen im folgenden Verhältnis stehen:

1 Mol Formose vom mittleren Molekulargewicht 166, 1,17 Mol Harnstoff und 0,94 Mol Wasser.
Konzentrationen: ca. 65,6 % Formose, 27,7 % Harnstoff, 6,7 % Wasser

$\eta_{25^\circ}$ = 8322 mPas

Die Viskosität der Ausgangsformose ist bei einem Wassergehalt von ca. 6,6 % schon so hoch, daß sie bei 25°C nicht gemessen werden kann. Selbst bei 50°C beträgt die Viskosität dieser Formose etwa 26 300 mPas.

c) Man verfährt wie bei a) und stellt eine Mischung her, in welcher die Molzahlen in folgendem Verhältnis stehen und folgende Konzentrationen der Komponenten in der Mischung vorliegen:
Molzahlen: 1 Mol Formose, 1,2 Mol Harnstoff, 1,87 Mol Wasser;
Konzentrationen: ca. 61,1 % Formose, 26,5 % Harnstoff, 12,4 % Wasser

$\eta_{25^\circ C}$ = 944 mPas

Die Viskosität der Ausgangsformose bei einem Wassergehalt von ca. 12,4 % beträgt bei 25°C 25400 mPas.

d) Man verfährt wie bei a) und stellt eine Mischung her, in der die Molzahlen in folgendem Verhältnis stehen und folgende Konzentrationen der Komponenten in der Mischung vorliegen.
Molzahlen: 1 Mol Formose, 1,16 Mol Harnstoff, 5,63 Mol Wasser;
Konzentrationen: ca. 49,3 % Formose, 20,6 % Harnstoff, 30 % $H_2O$

$\eta_{25^\circ C}$ = 26,3 mPas

Die Viskosität der Ausgangsformose bei einem Wassergehalt von 30 % liegt bei 25°C bei 88 mPas.

e) Man verfährt wie bei a) und stellt eine Mischung her, in der die Molzahlen in folgendem Verhältnis stehen und folgende Konzentrationen der Komponenten in der Mischung vorliegen:

Molzahlen: 1 Mol Formose, 4,72 Mol Harnstoff, 5,7 Mol Wasser;
Konzentrationen: ca. 30,1 % Formose, 51,3 % Harnstoff, 18,6 % Wasser

$\eta_{25^\circ C} = 19{,}2$ mPas

Die Viskosität der Ausgangsformose bei einem Wassergehalt von 18,5 % beträgt ca. 1888 mPas, gemessen bei 25°C.

f) Man verfährt wie bei a) und stellt eine Mischung her, in der die Molzahlen in folgendem Verhältnis stehen und folgende Konzentrationen der Komponenten in der Mischung vorliegen:
Molzahlen: 1 Mol Formose, 5,52 Mol Harnstoff, 9,2 Mol Wasser;
Konzentrationen: ca. 25,2 % Formose, 50,2 % Harnstoff, 24,6 % Wasser

$\eta_{25^\circ C} = 19$ mPas

Die Viskosität der Ausgangsformose bei einem Wassergehalt von 25 % beträgt ca. 239 mPas.

Beispiel 14

Dieses Beispiel zeigt die technisch besonders interessante Verwendungsmöglichkeit der erfindungsgemäßen Gemische zur Herstellung äußerst flammwidriger, offenporiger, stark carbonisierender Polyharnstoff-Polyurethan-Polybiuret-Hartschaumstoffe im Kennzahlbereich 45 bis 50, d.h. mit unterschüssigen Mengen an Polyisocyanaten.

a) 57 Gew.-Teile der in Beispiel 1 beschriebenen Mischung A, enthaltend etwa 29,3 Gew.-Teile Formose, etwa 19,4 Gew.-Teile Harnstoff und 8,3 Gew.-Teile Wasser, werden bei 35°C mit 26 Gew.-Teilen eines auf Trimethylolpropan gestarteten Propylenoxid-Äthylenoxid-Mischpolyäthers der OH-Zahl 28, der als Elastifizierungsmittel dient, vermischt. Der Polyäther enthält 0,7 Gew.-Teile eines Emulgators der Konstitution

$$C_4H_9\text{-O-}CH_2CH_2\text{-}(OCH_2CH_2)_x\text{-OH}$$

(der Zahlenmittelwert von x beträgt 20).

Der intensiv gerührten Mischung werden

1,2 Gew.-Teile eines handelsüblichen Silicon-Stabilisators (Stabilisator OS 610 der Bayer AG)
0,2 Gew.-Teile Endoäthylenpiperazin und
0,25 Gew.-Teile Zinn-II-octoat zugefügt und anschließend
149 Gew.-Teile eines Phosgenierungsproduktes eines technischen Anilin-Formaldehyd-Kondensats

eingerührt. Das verwendete Polyisocyanat besitzt einen NCO-Gehalt von 29 %. Die Schaumstoffbildung ist nach 5 Minuten

und bei sehr gleichmäßiger Steigzeit ohne Schrumpferscheinungen beendet. Man erhält einen offenzelligen, in überwiegendem Maße Harnstoff- und Biuretgruppen enthaltenden Hartschaumstoff mit einem Raumgewicht von 28 $kg/m^3$.

Unter Berücksichtigung der eingesetzten NCO-, OH- und Wasser- bzw. $NH_2$-Äquivalente ergibt die Rechnung, daß der Hartschaum etwa mit der Kennzahl 45 hergestellt wurde. Geschnittene Hartschaumstoff-Streifen von 2 cm Breite, 1 cm Dicke und 10 cm Länge lassen sich bei voller Beflammung mit einer Bunsenflamme nicht zünden, die Laufgeschwindigkeit der Flamme ist daher gleich Null. Durch Beflammung des Streifens mit der Bunsenflamme über 30 Sekunden hinaus läßt sich ebenfalls keine Flammenausbreitung erzielen; der Brandvorgang äußert sich lediglich in einer Carbonisierung des Schaumstoffes und in der Abspaltung von wasserreichen Brandgasen.

b) Man verfährt wie unter a) beschrieben, setzt aber 5 Gewichtsteile der in Beispiel 15 c beschriebenen Mischung aus Formose und N-Methylolcaprolactam zu, wodurch die Reaktion zwischen NCO-Gruppen und Wasser stark aktiviert und die Fließfähigkeit des Systems verlängert wird. Man erhält einen Hartschaumstoff mit ebenfalls ausgezeichneter Flammwidrigkeit vom Raumgewicht 24 $kg/m^3$.

c) Man verfährt wie unter a) beschrieben, ersetzt aber die 57 g der in Beispiel 1 beschriebenen Mischung A durch 57 g der Mischung b) des Beispiels 9, die ca. 44 % Formose, 8 % Wasser und 48 % Monomethylolharnstoff enthält und setzt dieser Mischung zusätzlich 3 g Wasser zu. Der Anteil des elastifizierenden Polyäthers der in a) genannten Art wird auf 60 g erhöht, die Polyisocyanat-Menge auf 156 g.

Man erhält einen elastifizierten, offenzelligen Hartschaumstoff mit einem Raumgewicht von 23 $Kg/m^3$ und einer hervorragenden Flammwidrigkeit. Durch Extraktionsversuche am fertigen Schaumstoff mit Wasser läßt sich nachweisen, daß der N-Methylolharnstoff quantitativ in die Polyurethanmatrix eingebaut wurde.

Beispiel 15

In 2000 Gew.-Teile der in Beispiel 1 beschriebenen Mischung A werden 120 Gew.-Teile Aluminiumhydroxid (Tonerdehydrat) unter Bildung einer stabilen, nicht sedimentierenden, pastenartigen Dispersion eingerührt. Daraus gemäß Beispiel 14 hergestellte Hartschaumstoffe weisen ebenfalls eine hervorragende Flammwidrigkeit auf.

Beispiel 16

Dieses Beispiel beschreibt die Verwendung der erfindungsgemäßen Produkte zur Durchführung von Matrizenreaktionen gemäß der Verfahrensweise der deutschen Patentschrift 1 911 643.

Der als Matrix verwendete elastische Polyurethanschaumstoff wurde auf folgende Weise hergestellt:

100 Gewichtsteile eines Polypropylenglykoläthers, bei dessen Herstellung Trimethylolpropan und 1,2-Propylenglykol (Molverhältnis 1 : 1) als Starter verwendet wurden (OH-Zahl 47), 2,7 Gewichtsteile permethyliertes Diäthylentriamin und 0,23 Gewichtsteile eines Zinn-(II)-Salzes der 2-Äthylcapronsäure wurden miteinander vermischt. Zu dieser Mischung wurden

45,9 Gewichtsteile eines Isomerengemisches, bestehend aus 80 Gewichtsteilen 1-Methylbenzol-2,4-diisocyanat und 20 Gewichtsteile 1-Methylbenzol-2,6-diisocyanat zugesetzt und mit einem hochtourigen Rührer innig vermischt. Der weiße, elastische Schaumstoff war weitgehend offenzellig und hatte ein Raumgewicht von ca. 35 kg/m³.

26,6 g dieses elastischen Polyurethanschaumstoffes wurden in Form eines Quaders (Dimensionen: 15 cm x 10 cm x 5 cm) durch Zusammenpressen und Ansaugen einer Lösung von 25 g der erfindungsgemäßen Mischung b) aus Beispiel 9, die 44 % Formose, 48 % N-Monomethylolharnstoff ($H_2N-\underset{\underset{O}{\|}}{C}-NH-CH_2OH$), 8 % Wasser enthält und zur Verdünnung in einer Mischung von 60 g Wasser, 8 g Formalinlösung (30 %ig) und 0,4 g Essigsäure gelöst wurde, beladen. Hierauf wurde der Polyurethanschaumstoffquader 2 Stunden lang bei 100°C im Vakuumtrockenschrank auskondensiert. Man erhält einen offenzelligen halbharten Kombinationsschaumstoff, der aus ca. 47 Gew.-% an Harnstoff-Formaldehyd-Formose-Kondensaten besteht. Dieser neue Schaumstoff ist selbstverlöschend und carbonisiert stark, während die verwendete Matrix eine hohe Abbrenngeschwindigkeit von ca. 2 cm/sek besitzt, gemessen an einem Streifen des Querschnitts 0,25 $cm^2$. Der Schaumstoff besitzt ein Raumgewicht von 68 $kg/m^3$.

## Beispiel 17

Dieses Beispiel beschreibt die Verwendung der erfindungsgemäßen Produkte zur Imprägnierung von offenzelligen Polyurethanweichschaumstoffen, wobei die erfindungsgemäßen Produkte ohne nennenswerte Reaktion mit den Urethan- und Harnstoffgruppen des Polyurethanschaumstoffes lediglich durch ihre Diffusion in die Lamellen und Zellstege der Matrix für eine hervorragende Flammwidrigkeit des PU-Schaumstoffes sorgen.

Die Herstellung des zur Imprägnierung verwendeten Polyurethanschaumstoffes wurde im Beispiel 16 beschrieben.

26,6 g des in Beispiel 16 beschriebenen elastischen Polyurethanschaumstoffes wurden in Form eines Quaders (Dimension: 15 cm x 10 cm x 5 cm) durch Zusammenpressen und Ansaugen einer Lösung von 25 g der erfindungsgemäßen Mischung a) aus Beispiel 3, die etwa 51,7 % Formose, 33,6 % Harnstoff und 14,6 % Wasser enthält und zur Verdünnung in 55 g Wasser gelöst wurde, beladen. Hierauf wurde der imprägnierte Polyurethanschaumstoffquader im Verlaufe von 2 Stunden im Vakuumtrockenschrank bei 70°C getrocknet. Man erhält einen imprägnierten Schaumstoff, der ca. 17,4 % Harnstoff und ca. 44,3 % Formose in den Lamellen und Zellstegen des Schaumstoffes physikalisch gebunden enthält. Dieser imprägnierte Schaumstoff ist selbstverlöschend und carbonisiert durch die Anwesenheit von Formose und Harnstoff bei der Beflammung, während die verwendete Matrix eine hohe Abbrenngeschwindigkeit von ca. 2 cm/sek. besitzt, gemessen an einem Streifen des Querschnitts 0,25 $cm^2$.

Imprägniert man in genau gleicher Weise den Polyurethanschaumstoff nur an der Oberfläche des Quaders durch Besprühen mit der vorgenannten erfindungsgemäßen Mischung, so wird die Oberfläche des Quaders flammwidrig und selbstverlöschend.

Patentansprüche

1. Gegenüber Isocyanaten reaktive Mischungen aus

   a) 10-95 Gew.-% (bezogen auf a + b + c) einer Mischung aus mehrwertigen Alkoholen, Hydroxyaldehyden und Hydroxyketonen, welche durch Kondensation von Formaldehydrat erhalten wurde,

   b) 5-80 Gew.-% (bezogen auf a + b + c) an zur Aminoplastbildung befähigten Monomeren bzw. deren N-Methylolierungsprodukten und

   c) 0-80 Gew.-% (bezogen auf a + b + c) an Wasser.

2. Gemische nach Anspruch 1, dadurch gekennzeichnet, daß sie

   a) 20-80 Gew.-% (bezogen auf a + b + c) einer durch Kondensation von Formaldehydhydrat erhaltenen Mischung von mehrwertigen Alkoholen, Hydroxyaldehyden und Hydroxyketonen,

   b) 20-70 Gew.-% (bezogen auf a + b + c) an zur Aminoplastbildung befähigten Monomeren bzw. deren N-Methylolierungsprodukten und

   c) 0,3 - 50 Gew.-% (bezogen auf a + b + c) an Wasser enthalten.

3. Gemische nach Anspruch 1 oder 2, dadurch gekennzeichnet, daß sie 0,8-35 Gew.-% an Wasser enthalten.

4. Gemische nach Anspruch 1 bis 3, dadurch gekennzeichnet, daß das Gewichtsverhältnis der Komponenten a) und b) zwischen 20:1 und 1:2 liegt.

5. Gemische nach Anspruch 1 bis 4, dadurch gekennzeichnet, daß sie pro Mol der Komponente a) 0,5-6 Mol der Komponente b) und 0,3-10 Mol der Komponente c) enthalten.

6. Verfahren zur Herstellung von Gemischen gemäß Anspruch 1 bis 5, dadurch gekennzeichnet, daß man 20-65 Gew.-% Formaldehyd enthaltende wäßrige Formalin-Lösungen und/oder Paraformaldehyd-Dispersionen bei pH-Werten zwischen 4 und 9 und bei einer Reaktionstemperatur von 70-110°C in Gegenwart von löslichen oder unlöslichen Salzen von Metallen der 2. bis 4. Hauptgruppe oder der 1. bis 8. Nebengruppe des periodischen Systems der Elemente bzw. an einen hochmolekularen Träger gebundenen Metallionen und eines Co-Katalysators auf Basis von zur Endiolbildung befähigten Verbindungen kondensiert, wobei man die Kondensationsreaktion in Gegenwart von zur Aminoplastbildung befähigten Verbindungen ausführt und gegebenenfalls anschließend überschüssiges Wasser in an sich bekannter Weise entfernt.

7. Verfahren zur Herstellung von Gemischen gemäß Anspruch 1 bis 5, dadurch gekennzeichnet, daß man 20-65 Gew.-% Formaldehyd enthaltende wäßrige Formalin-Lösungen und/oder Paraformaldehyd-Dispersionen bei pH-Werten zwischen 4 und 9 bei einer Reaktionstemperatur von 70-110°C in Gegenwart von löslichen oder unlöslichen Salzen von Metallen der 2. bis 4. Hauptgruppe oder der 1. bis 8. Nebengruppe des periodischen Systems der Elemente bzw. an einen hochmolekularen Träger gebundenen Metallionen sowie eines

Co-Katalysators auf Basis von zur Endiolbildung befähigten Verbindungen bis zu einem Umsatz von 40-95 %, bezogen auf eingesetzten Formaldehyd, zu Gemischen von niedermolekularen mehrwertigen Alkoholen, Hydroxyaldehyden und Hydroxyketonen kondensiert, den Restformaldehyd durch Zusatz von zur Aminoplastbildung befähigten Verbindungen unter N-Methylolierung bindet und gegebenenfalls anschließend überschüssiges Wasser in an sich bekannter Weise entfernt.

8. Verfahren zur Herstellung von gegebenenfalls zellförmigen Polyurethan-Kunststoffen durch Umsetzung von

A) Polyisocyanaten mit

B) Polyhydroxylverbindungen mit einem Molekulargewicht unter 400, gegebenenfalls

C) Polyhydroxylverbindungen mit einem Molekulargewicht zwischen 400 und 10.000 sowie gegebenenfalls weiteren gegenüber Isocyanaten reaktiven Verbindungen, gegebenenfalls in Gegenwart von

D) Treibmitteln, Katalysatoren, Füllstoffen und weiteren an sich bekannten Zusatzstoffen,

dadurch gekennzeichnet, daß als Komponente B) Gemische gemäß Anspruch 1 bis 5 bzw. daraus durch saure oder basische Modifizierung erhaltene Kondensationsprodukte eingesetzt werden.

9. Verfahren nach Anspruch 8, dadurch gekennzeichnet, daß man als Komponente B) ein 4 bis 25 Gew.-% Wasser enthaltendes Gemisch einsetzt, 0 bis 100 Gew.-%, bezogen auf B) , der Komponente C) mitverwendet und eine Isocyanatkennzahl von 20 bis 70 einhält.

10. Verwendung von Gemischen nach Anspruch 1 bis 5 als Ausgangskomponente für die Herstellung von Aminoplastkunststoffen.

0001739

Europäisches Patentamt

# EUROPÄISCHER RECHERCHENBERICHT

Nummer der Anmeldung

EP 78 10 0661

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| D | US - A - 2 269 935 (DU PONT)<br>* Anspruch 1 * | 6 | C 08 G 18/38<br>C 07 C 27/00<br>31/18<br>47/19<br>49/17<br>C 08 G 12/02 |
| E,D | DE - A - 2 721 186 (BAYER)<br>16. November 1978<br>* Ansprüche 1,14,38,45,57; Beispiele 10 und 18; Seite 61, Absatz 2; Seite 83, Absatz 1; Seite 91, letzter Absatz bis Seite 92, Absatz 1; Seite 91, Absatz 1 * | 1,6,7,<br>8,10 | |

**RECHERCHIERTE SACHGEBIETE (Int. Cl.²)**

C 07 C 27/00
47/19
49/17
C 07 H 3/02
3/00
1/00
C 08 G 18/38
18/32
18/65
18/28
18/30
18/14
12/00
12/02
12/10

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 08-12-1978 | MARX |